# EUROPÄISCHE PATENTSCHRIFT

(11) **EP 0 199 036 B1**
(45) Veröffentlichungstag und Bekanntmachung des Hinweises auf die Patenterteilung: **25.01.1989**
(21) Anmeldenummer: 86103105.2
(22) Anmeldetag: 08.03.1986
(51) Int. Cl.: C09B 62/002, C09B 19/02

(54) **Triphendioxazin-Farbstoffe**
Triphenedioxazine dyes
Colorants triphénodioxazines

(30) Priorität: 23.03.1985 DE 3510612
(43) Veröffentlichungstag der Anmeldung: 29.10.1986
(73) Patentinhaber: BAYER AG, 51368 Leverkusen (DE)
(72) Erfinder: Wunderlich, Klaus, Dr., D-5090 Leverkusen 1 (DE); Harms, Wolfgang, Dr., D-5090 Leverkusen 1 (DE); Herd, Karl Josef, Dr., D-5068 Odenthal (DE); Jäger, Horst, Dr., D-5090 Leverkusen 1 (DE)

(56) Entgegenhaltungen:
- EP-A- 0 053 743
- EP-A- 0 101 665
- FR-A- 2 297 232

## Beschreibung

Gegenstand der vorliegenden Erfindung sind Farbstoffe der Formel 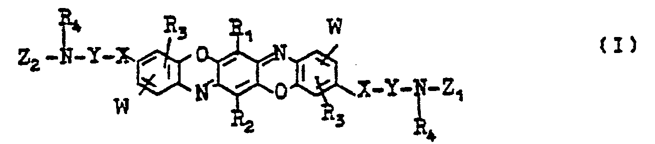 worin
R₁, R₂ = H, CI, Br, C₁-C₄-Alkyl, gegebenenfalls substituiertes Phenyl, ggf. substituiertes Phenoxy, C₁-C₄-Alkoxy, Acylamino, Carboxy, gegebenenfalls substituiertes Carbonamid,
R₃ = H, C₁-C₄-Alkyl, CI, Br, C₁-C₄-Alkoxy, Sulfo, Carboxy,
R₄ = H, gegebenenfalls durch SO₃H₂, OSO₃H, COOH, OP0₃H₂ oder OH substituiertes C₁-C₄-Alkyl, Cyclohexyl, Phenyl, Sulfophenyl,
   x = N, 0 ^{R}5
Rs = H oder gegebenenfalls substituiertes C₁-C₆-Alkyl, Cycloalkyl, Aryl oder Aralkyl,
Y = gegebenenfalls substituiertes, gegebenenfalls durch 0, S oder N unterbrochenes C₂-C₆-Alkylen, Cyclohexylen, gegebenenfalls substituiertes Aralkylen oder Arylen,
Zi, Z₂ = H oder faserreaktiver Rest,
W = nicht-faserreaktiver Sulfonylrest, insbesondere Alkyl-, Aralkyl-, Cycloalkyl- oder Arylsulfonylrest, vorzugsweise ein Rest -S0₂0 mit
Q = C₂-Alkyl gegebenenfalls substituiert durch S0₃H, COOH, Carbonamid, Sulfonamid, Ci-C4-Alkoxy oder gegebenenfalls substituiertes C₁- oder C₃-C₆-Alkyl, Cycloalkyl, Aralkyl, Aryl, wobei Aryl vorzugsweise für gegebenenfalls substituiertes Phenyl und Aralkyl vorzugsweise für gegebenenfalls substituiertes Phenyl-C₁-C₄-Alkyl steht.

Geeignete Substituenten in Cᵢ- oder C₃-C₆-Alkyl, Cycloalkyl, Aralkyl, Aryl sind beispielsweise S0₃H, OS0₃H, S-SO₃H, COOH, gegebenenfalls substituierts Carbonamid, -COO-C₁-C₄-Alkyl, CN, -PO₃H₂, -OPO₃H₂,-O-CO-C1-C4-Alkyl, OH, C₁-C₄-Alkoxy, -(CH₂-CH₂-O)₁₋₄-CH₂-CH₂-OH, -(CH₂-CH₂-O)₁₋₄-CH₂-CH₂-OSO₃H, Halogen.

Geeignete Reste R₁, R₂ sind außer Wasserstoff, CI, Br, C₁-C₄-Alkyl, C₁-C₄-Alkoxy, insbesondere gegebenenfalls substituiertes Phenyl und Phenoxy, Acylamino, insbesondere Acetylamino und Benzoylamino, Carboxy, gegebenenfalls weiter substituiertes Carbonamid. Brückenglieder sind beispielsweise:

Ethylen, 1,2- und 1,3-Propylen, 1,2-, 1,3-, 1,4- und 2,3-Butylen, 2-Methyl-1,3-Propylen, 2,2-Dimethylpropylen, 2-Methyl-2,4-pentylen, 1-Phenylethylen, 2,5-Hexylen, 1,5-Pentylen, 1,6-Hexylen, 1,3-Cyclohexylen, 1,4-Cyclohexylen, 4-Methyl-1,3-cyclohexylen, 2-Hydroxy-1,3-propylen, 2-Sulfato-1,3-propylen, 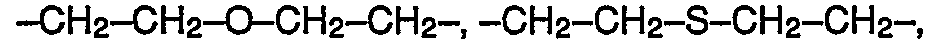 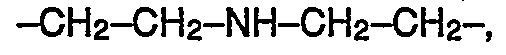 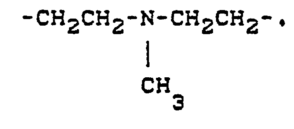 Aralkylenreste wie 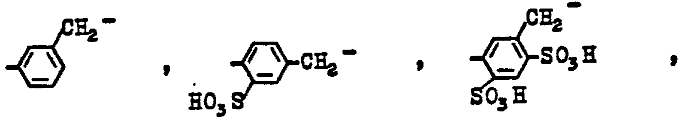 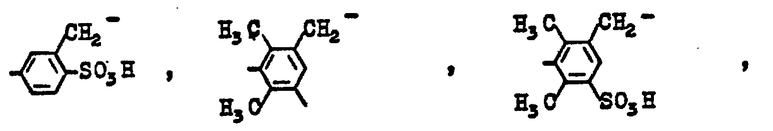 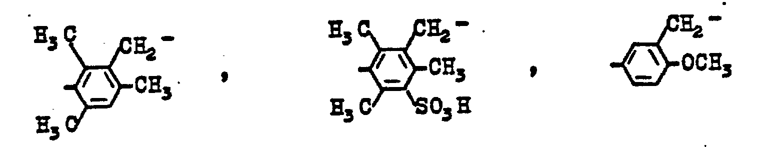 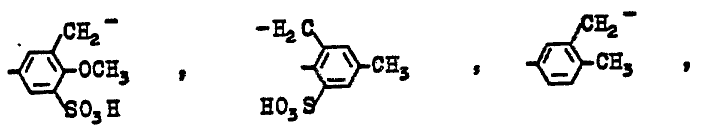 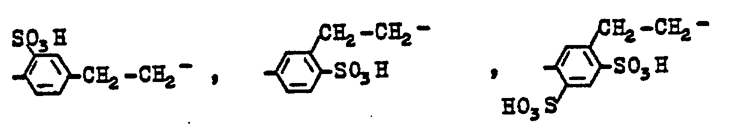 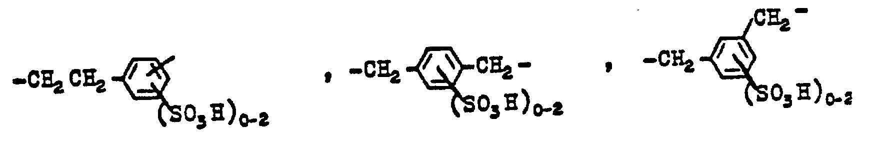 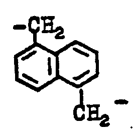 Geeignete Brückenglieder Y sind weiterhin Arylenreste wie gegebenenfalls substituiertes Phenylen, insbesondere Phenylen und durch Alkyl, Alkoxy, Sulfo, Carboxy oder Halogen substituiertes Phenylen wie 1,2-, 1,3-, 1,4-Phenylen, 3-Methyl-1,2-phenylen, 4-Methyl-1,2-phenylen, 2-Methyl-1,3-phenylen, 4-Methyl-1,3-phenylen, 5-Methyl-1,3-phenylen, 2-Methyl-1,4-phenylen, 2,4,6-Trimethyl-1,3-phenylen, 2,3,5,6-Tetramethyl-1,4-phenylen, 2,6-Dimethyl-1,3-phenylen, 2-Methyl-6-ethyl-1,3-phenylen, 2-Methyl-4,6-diethyl-1,3-phenylen, 2,6-Diethyl-4-Methyl-1,3-phenylen, 2-Methoxy-1,3-phenylen, 4-Methoxy-1,3-phenylen, 6-Methoxy-1,3-phenylen, 2-Methoxy-1,4-phenylen, 4-Chlor-1,3-phenylen, 2-Chlor-1,4-phenylen, wie insbesondere die durch 1-2 Sulfonsäuregruppen substituierten genannten Arylenreste wie zum Beispiel 4-Sulfo-1,2-phenylen, 4-Sulfo-1,3-phenylen, 3-Sulfo-1,4-phenylen, 2-Sulfo-1,4-phenylen, 4,6-Disulfo-1,3-phenylen, 2,5-Disulfo-1,4-phenylen, 2-Methyl-5-sulfo-1,3-phenylen, 2-Methyl-4-sulfo-1,3-phenylen, 2,4,6-Trimethyl-5-sulfo-1,3-phenylen, 2,6-Dimethyl-4- und -5-sulfo-1,3-phenylen, 2-Methyl-6-sulfo-1,3-phenylen, 4-Methyl-6-sulfo-1,3-phenylen, 6-Methyl-4-sulfo-1,3-phenylen, 3-Methyl-6-sulfo-1,4-phenylen, 6-Methoxy-4-sulfo-1,3-phenylen, 4-Methoxy-6-sulfo-1,3-phenylen

Geeignete Reste Q sind beispielsweise Methyl, Ethyl, Propyl, Butyl, Pentyl, Hexyl, Allyl sowie die durch Sulfo-, Sulfonamid-, Carboxy-, Carbonamid-, Carbonester-, Cyan, Keto-, C₁-C₄-Alkoxy, Aroxygruppen substituierten C₁-C₆-Alkylgruppen wie CH₂-COOH, -CH₂-COO-Alkyl, -CH₂-CONH₂, -CH₂-CN, -CH_{z}-CO-Alkyl, 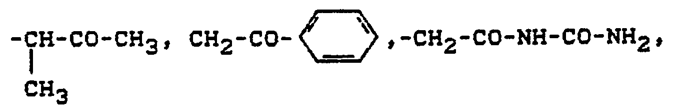 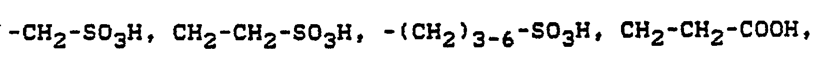 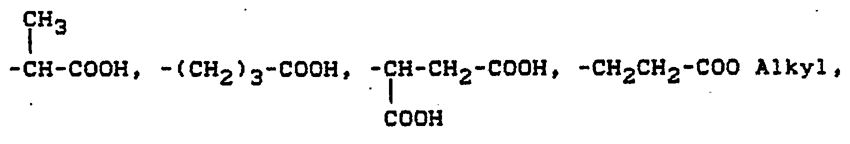 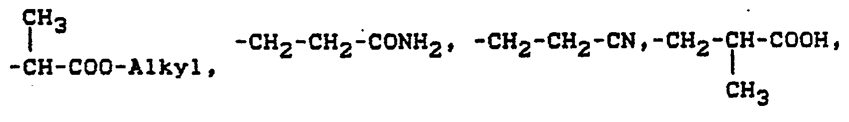 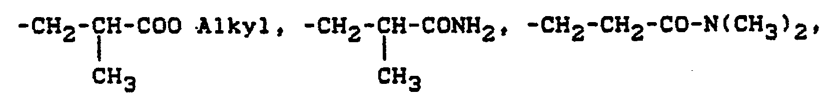 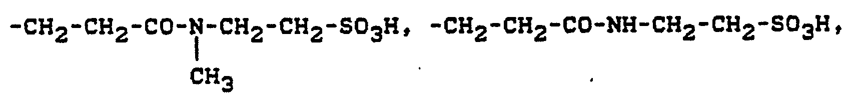 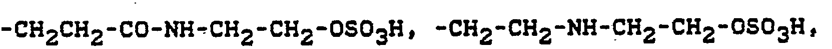 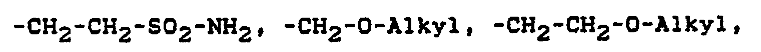 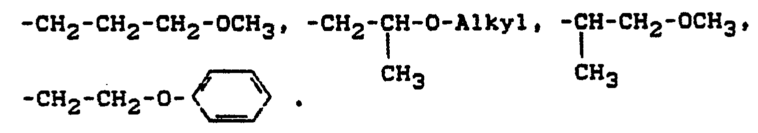 Ferner durch Sulfato-, Thiosulfato-, Phosphato-, Alkanoyloxy-, Halogen-, Hydroxygruppen substituierte C₃-C₆-Alkylgruppen wie -(CH₂)₃₋₆-OSO₃H, -(CH₂)₃₋₆-OPO₃H₂, 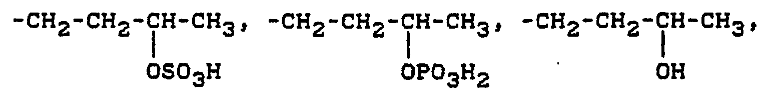 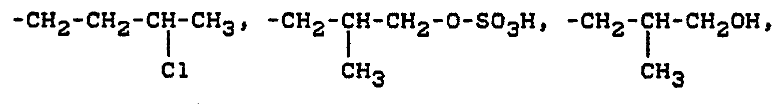 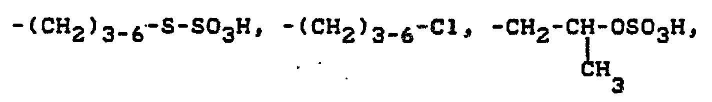 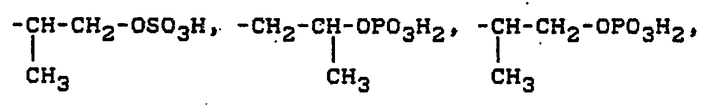 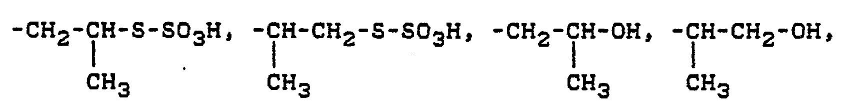 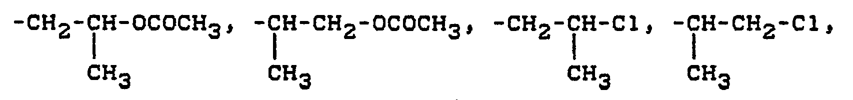 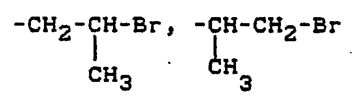 weiterhin durch Sulfo, Sulfato, Carboxy substituierte Aryl-C₁-C₄-Alkylreste wie Benzyl, o-, m-, p-Sulfobenzyl, 2-Phenyl-2-sulfatoethyl, o-, m-, p-Carboxybenzyl, 1- oder 2-Phenylethyl sowie die entsprechenden im Phenylrest sulfonierten Reste, 2- und 3-Phenyl-1-propyl, 4-Phenyl-2-butyl sowie die entsprechenden im Phenylrest sulfonierten Reste, Naphthylmethyl, 5-, 6-, 7- oder 8-Sulfo-naphthyl-l-methyl, 5-, 6-, 7- oder 8-Sulfonaphthyl-1-methyl, ferner durch die Heteroatome 0, S oder N unterbrochenen und gegebenenfalls durch Sulfo, Sulfato, Carboxy, Hydroxy, C₁-C₄-Alkoxy, Halogen substituierten Alkyl- und Aralkylreste wie 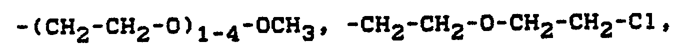 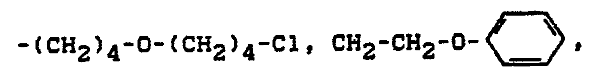 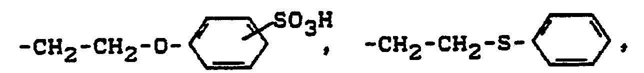 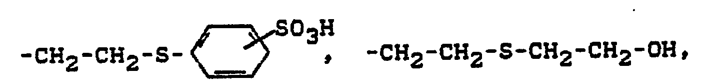 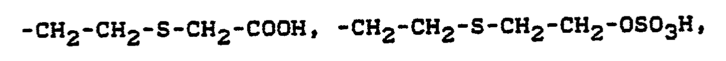 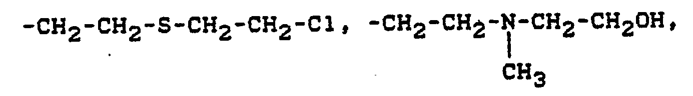 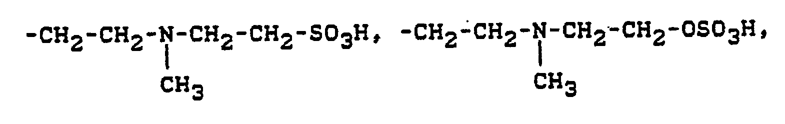 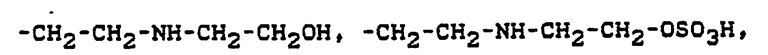 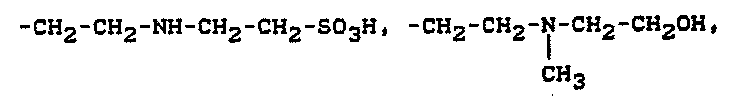 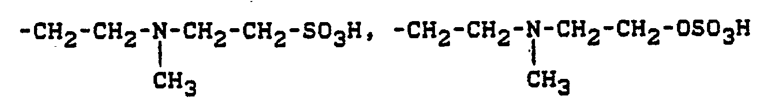 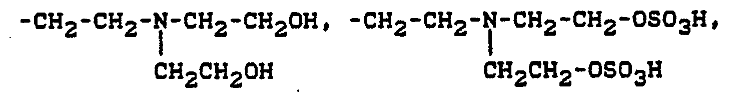 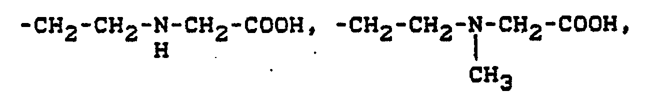 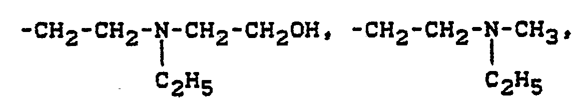 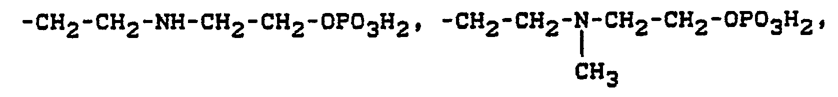 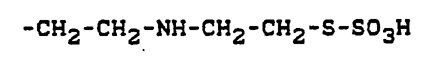 ferner Arylreste insbesondere gegebenenfalls substituierte Phenyl- oder Naphthylreste wie Phenyl, 2-, 3-, 4-Sulfophenyl, Carboxyphenyl, Methylphenyl, Chlorphenyl, C₁-C₄-Alkoxyphenyl, 5-, 6-, 7-, 8-Sulfo-1-naphthyl, 5-, 6-, 7-, 8-Sulfo-2-naphthyl, 5,7-Disulfo-1-naphthyl, 6,8-Disulfo-2-naphthyl.

Vorzugsweise stehen R₁ und R₂ für CI und R₃ für H.

Geeignete faserreaktive Reste Z, also solche, die unter Färbebedingungen mit hydroxylgruppen-oder amidgruppenhaltigen Materialien unter Ausbildung einer kovalenten Bindung reagieren, sind beispielsweise solche, die mindestens einen abspaltbaren Substituenten an einen heterocyclischen oder an einen aliphatischen Rest gebunden enthalten, insbesondere solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (CI, Br oder F), Ammonium, einschließlich Hydrazinium, Sulfonium, Sulfonyl, Azido-(N₃), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlor- triazinyl-6-, 2-Alkylamino-4-chlortriazinyl-6-, wie 2-Methylamino-4-chlortriazinyl-6-, 2-Ethylamino-oder 2-Propylamino-4-chlortriazinyl-6-, 2-_{ß}-Oxethylamino-4-chlortriazinyl-6-, 2-Di-_{ß}-oxethylamino-4- chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m-oder p-Carboxy- oder Sulfophenyl)-amino-4-chlortriazinyl-6-, 2-(2', 4' -2', 5'- oder 3', 4'-Disulfophenyl)-amino-4-chlor-triazinyl-6, 2-Alkoxy-4-chlortriazinyl-6-, wie 2-Methoxy- oder Ethoxy-4- chlortriazinyl-6-, 2-(Phenyl-sulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Arylmercapto- oder 2-(substituiertes Aryl)-mercapto-4-chlortriazinyl-6-, wie 2-ß-Hydroxyethylmercapto-4- chlortriazinyl-6-, 2-Phenylmercapto-4-chlortriazinyl-6-, 3-(4'-Methylphenyl)-mercapto-4-chlortria- zinyl-6-, 2-(2',4'-Dinitro)-phenyl-mercapto-4-chlortriazinyl-6-,2-Methyl-4-chlortriazinyl-6-, 2-Phenyl-4-chlor-triazinyl-6-, 2,4-Difluortriazinyl-6, Monofluortriazinylreste, die durch Amino-, Alkylamino-, Aralkylamino, Arylaminogruppen substituiert sind, wobei Alkyl, insbesondere gegebenenfalls substituiertes Cₗ-C₄-Alkyl, Aralkyl, insbesondere gegebenenfalls substituiertes Phenyl-C₁-C₄-Alkyl und Aryl, insbesondere gegebenenfalls durch Sulfo-, Alkyl-, insbesondere Cᵢ-C₄-Alkyl, Alkoxy-, insbesondere G-C₄-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-ß-Methoxy-ethylamino-4-fluor-triazinyl-6, 2-_{ß}-Hydroxy-ethylamino-4-fluor-triazinyl-6, 2-Di-(ß-hydroxyethylamino)-4-fluor-triazinyl-6, 2-ß-Sulfoethylamino-4-fluortriazinyl-6, 2-ß-Sulfoethyl-methylamino-4-fluor-triazinyl-6, 2-Carboxymethylamino-4-fluor-triazinyl-6, 2-ß-Cyanethylamino-4-fluor-triazinyl-6, 2-Benzylamino-4-fluor-triazinyl-6, 2-ß-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2', 5'-Disulfophenyl)-amino-4- fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-f!uor-triaziny!-6, 2-(6',8'-Disulfonaphthyl-(2'))-amino-4-fluor-triazinyl-6, 2-(N-Methylphenyl)-amino-4-fluor-triazinyl-6, 2-(N-ethylphenyl)-amino-4-fluor-triazinyl-6, 2-(N-ß-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, 2-Chlor- oder 2-Fluor-4-(4'-ß-sulfatoethylsulfonyl-phenylamino)-6-triazinyl; 2-Chlor- oder 2-Fluor-4-(3'-ß-sulfatoethylsulfonyl-phenylamino)-6-triazinyl; 2-Chlor- und 2-Fluor-4-(ß-(ß'-sulfatoethylsul- fonyl)-ethylamino)-6-triazinyl; 2-Fluor-4-bis-(ß-(ß'-chlorethylsulfonyl)-ethyl)-amino-6-triazinyl.

Die Halogentriazinylreste können auch mit einem zweiten Halogentriazinylrest verknüpft sein. Beispiele für derartige Reste sind die folgenden:

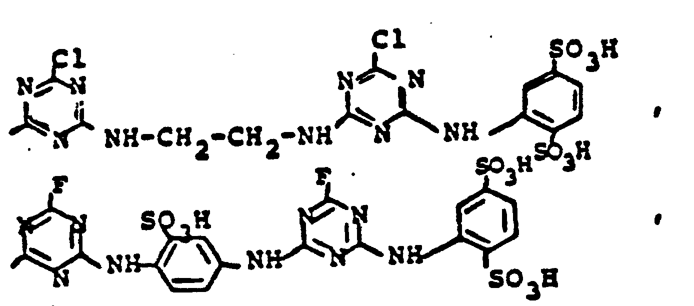

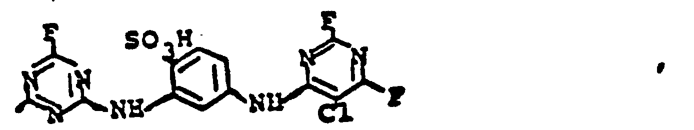

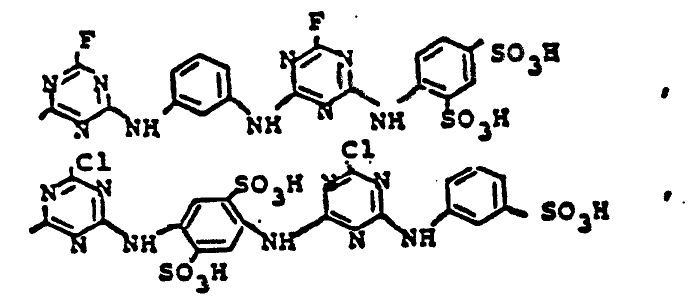

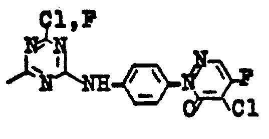

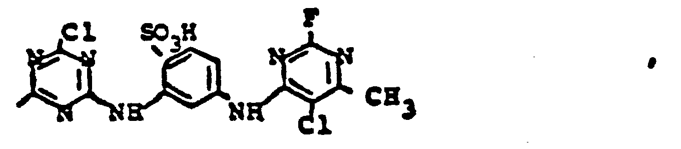

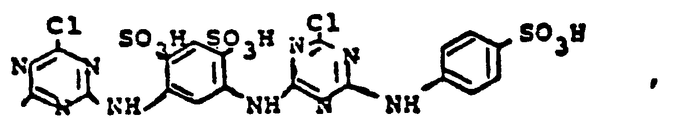

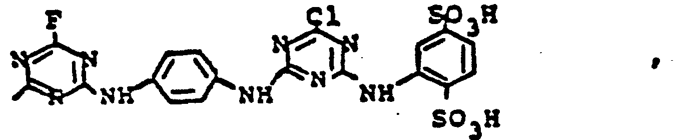

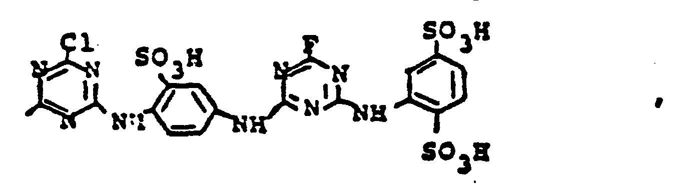

Weiterhin können die reaktiven Halogenatome in den oben genannten 2-Halogen-4-substituierten- triazinyl-Resten unter Bildung quartärer Salze noch gegen tertiäre Basen wie Trimethylamin, Triethylamin, Dimethyl-ß-hydroxy-ethylamin, Triethanolamin, N,N-Dimethylhydrazin, Pyridin, a-, y-Picolin, Nicotinsäure oder Isonicotinsäure ausgetauscht werden.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano-oder -5-vinyl- oder -5-sulfo- oder -5-mono- -di- oder -trichlormethyl- oder -5-carboalkoxy-pyrimidinyl-6-, 2,6-Dichlorpyrimidin-4-car-bonyl-, 2,4-Dichlorpyrimidinyl-6-, 2,6-Dichlorpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinox- alin-6-sulfonyl-, 2,3-Dichlorchinoxalin-6-carbonyl-, 2,3-Dichlorchinoxalin-6-sulfonyl-, 1,4-Dichlor- phthalazin-6-sulfonyl- oder -6-carbonyl-, 2,4-Dichlorchinazolin-7- oder -6-sulfonyl- oder -carbonyl-, 2- oder 3- oder 4-(4',5'-Dichlor-pyridazon-6'-yl-1')-phenylsulfonyl- oder carbonyl-, ß-(4', 5'-Dichlorpy- ridazon-6'-yl-1')ethylcarbonyl-, N-Methyl-N-(2,4-dichlortriazinyl-6-)-carbamyl-, N-Methyl-N-(2-methylamino-4-chlortriazinyl-6)-carbamyl-, N-Methyl-N-2-dimethylamino-4-chlortriazinyl-6)-carbamyl-, N-Methyl- oder N-Ethyl-N-(2,4-dichlortriazinyl-6-)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten Reste, unter diesen beispielsweise 2-Fluor-4-pyrimidinyl-, 2,6-Difiuor-4-pyrimidinyi-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluor-methyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlor- pyrimidin-4-yl; 2-Methyl-4-fluor-5-methylsulfonylpyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluor-methyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortria- zinyl-6-, 2-(3'-Sulfophenyl)-sulfonyl-4-chlortriazinyl-6-, 2,4-Bis-(3'-carboxyphenylsulfonyl-)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methyl-sulfonyl-pyrimidin-5-sulfonyl-, 2-Methylsulfonyl-pyrimidinyl-4, 2-Phenylsulfonyl-pyrimidinyl-4-, 2-Trichlor-methylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlor-methyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethyl-sulfonyl-5-chlor-6-methyl-pyrimidinyl-4-, 2-Methyl-sulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-5-cyan-6-methoxy-pyrimidinyl-4-, 2-Methylsutfonyl-5-chlor-pyrimidinyl-4-,2-Sulfoethyl- sulfonyl-6-methyl-pyrimidinyl-4-, 2-Methylsulfonyl-5-brom-pyrimidinyl-4-, 2-Phenyl-sulfonyl-5-chlor- pyrimidinyl-4-, 2-Carboxymethylsulfonyl-5-chlor-6-methyl-pyrimidinyl-4-, 2-Methylsulfonyl-6-chlorpy- rimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, (2,4-Bis(methylsulfonyl)-pyrimidin-5-sulfonyl-, 2-Methylsulfonyl-4-chlor-6-methyl-pyrimidin-5-sulfonyl- oder -carbonyl-; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethyl- hydrazinium)-4-phenylamino- oder -4-(o-, m- oder p-sulfophenyl)-aminotriazinyl-6-, 2-(2-lsopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bisazabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-aminotriazinyl-6- sowie entsprechende 2-Onium-triazinyl-6-Reste, die in 4-Stellung durch Alkylamino-, wie Methylamino-, Ethylamino- oder β-Hydroxyethylamino- oder Alkoxy-, wie Phenoxy- oder Sulfophenoxy-Gruppen substituiert sind; 2-Chlorbenzthiazol-5-oder -6-carbonyl- oder -5- oder -6-sulfonyl-, 2-Arylsulfonyl- oder -Alkylsulfonylbenz-thiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyi- oder -sulfonyl-, 2-Chlorbenzimidazol-5- oder -6-carbonyl-oder -sulfonyl-, 2-Chlor-1-methylbenzimidazol-5- oder -6-carbonyl- oder sulfonyl-, 2-Chlor-4-methyl- thiazol- (1,3)-5-carbonyl- oder -4- oder -5-sulfonyl-, N-Oxid des 4-Chlor- oder 4-Nitrochinoiin-5-carbonyl.

Des weiteren sind Reaktivgruppen der aliphatischen Reihe zu nennen, wei Acryloyl-, Mono-, Di- oder Trichloracryloyl-, wie -CO-CH=CH-CI, -CO-CCI=CH₂, -CO-CCI=CH-CH₃, ferner -CO-CCI=CH-COOH, -CO-CH=CCI-COOH, ß-Chlorpropionyl-, 3-Phenylsulfonylpropionyl-, 3-Methylsulfonyl-, Propionyl-, ß-Sulfato-ethylaminosulfonyl-, Vinylsulfonyl, ß-Chlorethylsulfonyl-, β-Sulfatoethylsulfonyl-, ß-Phosphatoethylsulfonyl, ß-Thiosulfatoethylsulfonyl, β-Methyl-sulfonylethylsulfonyl-, ß-Phenylsulfonylethylsulfonyl-, 2-Fluor-2-chlor-3,3-difluorcyclobutan-1-carbonyl-, 2,2,3,3-Tetrafluorcyclobutan-carbonyl-1- oder -sulfonyl-l-, β-(2,2,3,3-Tetrafluorcyclobutyl-1)-acryloyl, a- oder β-Bromacryloyl-, a- oder β-Alkyl- oder Arylsulfonyl-acryloyl-Gruppen, wie a- oder ß-Methylsulfonylacryloyl, a,ß-Dichlor- und Dibrompropionyl.

Bevorzugte faserreaktive Reste sind jedoch solche, die mindestens einen reaktiven Substituenten an einem 5- oder 6-gliedrigen heterocyclischen Ring gebunden enthalten, insbesondere an einem sogenannten Triazinring oder Pyrimidinring.

Bevorzugte Farbstoffe der Formel (I) sind solche der Formel 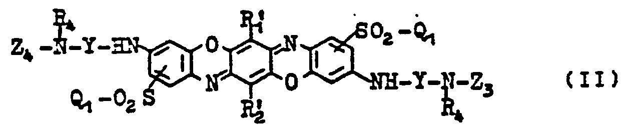 worin
Z₃, Z₄ = heterocyclischer faserreaktiver Rest oder H,
R'₁' R'₂ = CI, Br, CH₃, H,
Q₁ = Sulfo-C₁-C₆-alkyl, 3- bis 6-Sulfato-Cs-Cs-alkyl, Sulfo-phenyl-C₁-C₄-alkyl, Carboxy-C₁-C₆-alkyl, und
Y, R₄ die oben angegebene Bedeutung haben, weiterhin solche der Formel 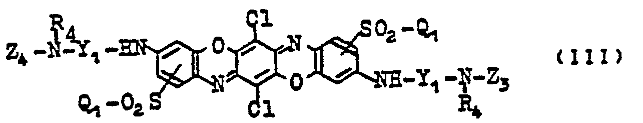 worin
Y₁ = C₂-C₂-Alkylen, Cyclohexylen und
Z₃, Z₄, R₄ und Q₁ die oben angegebene Bedeutung haben.

Besonders bevorzugt sind Farbstoffe der Formel 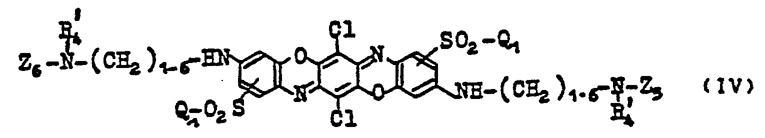 worin
R'₄ = H, CH2-CH2-0SO3H, -CH₂CH₂0H,
Z5, Z₆ = Halogentriazin- oder Halogenpyrimidinrest und
Q₁ die oben angegebene Bedeutung hat.

Die Herstellung von Verbindungen der Formel I mit Z₁ und/oder Z₂ = faserreaktiver Rest erfolgt in an sich bekannter Weise durch Umsetzung von Verbindungen der Formel 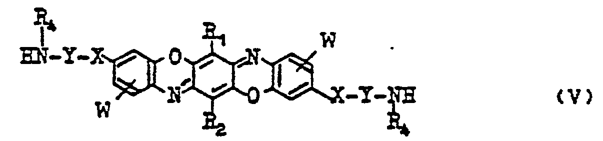 worin
Ri, R₂, R₄, X, Y und W die oben angegebene Bedeutung haben, mit Reaktivkomponenten 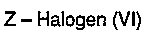 worin
Z = faserreaktiver Rest
Halogen = F, Cl, Br.

Die Kondensation der Dioxazin-Verbindungen der Formel (V) und der Reaktivkomponenten (VI) wird entweder in wäßrigem oder wäßrig-organischem Medium in Abhängigkeit von der eingesetzten Reaktivkomponente bei Temperaturen von 0-80_{°}C und pH-Werten von 3-9 in Gegenwart alkalischer Kondensationsmittel wie wäßriger Alkalihydrogencarbonat-, Alkalicarbonat-, Alkalihydroxid-, Alkalihydrogenphosphat-, Dialkalihydrogen-phosphat-oder Trialkaliphosphat-Lösöung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0-80_{°}C vollzogen.

Die Herstellung von Verbindungen der Formel (V) erfolgt nach an sich bekannten Methoden durch Kondensation von 1,4-Benzochinonen der Formel 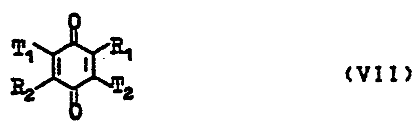 worin R₁ und R₂ die oben angegebene Bedeutung haben und T₁ und T₂ Wasserstoff, Cl, Br, O-Alkyl oder 0-Aryl bedeuten, mit den ebenfalls beanspruchten Amino-sulfon-Verbindungen der Formel 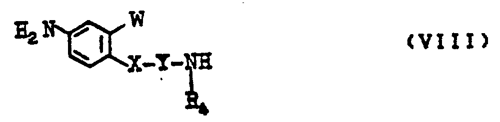 worin
R₄, X, Y und W die oben angegebene Bedeutung haben,
   zu Anilverbindungen der Formel 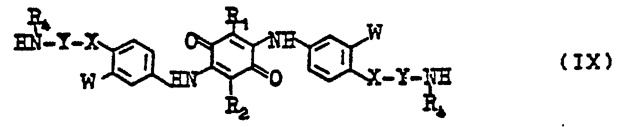 worin
R₁, R₂, R₄, X, Y und W die oben angegebene Bedeutung haben
   und Ringschluß der Anilverbindungen (IX) zu den Dioxazinfarbbasen (V).

Je nach den beim Ringschluß angewandten Reaktionsbedingungen kann die Sulfongruppe W bei den Dioxazinen (V) in den Benzringen des Dioxazinsystems entweder in den o- oder in den p-Stellungen zu den Ringsauerstoffatomen des Dioxazin-Systems auftreten.

Aminosulfonverbindungen der Formel (VIII) werden hergestellt aus Nitrosulfonen der Formel 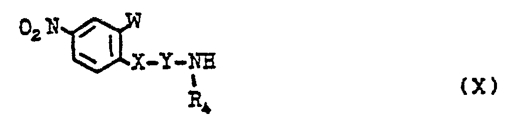 worin R₄, X, Y und W die oben angegebene Bedeutung haben, durch Reduktion mit katalytischem Wasserstoff oder mit Metallen und Säure wie beispielsweise mit Eisen oder Zink in Gegenwart von Essigsäure oder Salzsäure oder mit anderen zur Reduktion aromatischer Nitroverbindungen geeigneten Reagenzien.

Verbindungen der Formel (X) können beispielsweise hergestellt werden durch Kondensation von 2-Chlor-5-nitrobenzol-sulfonen der Formel 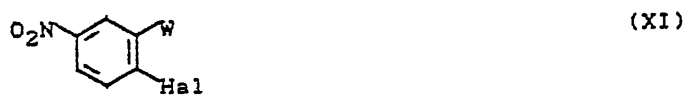 worin
Halogen = F, CI, Br
und W die oben angegebene Bedeutung hat,
   mit Aminoverbindungen der Formel 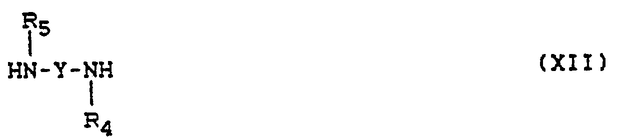 worin
R₄, Rs, Y die oben angegebene Bedeutung haben, oder mit Verbindungen der Formel
HX-Y-G (XIII)

worin
G = N0₂, Acylamino wie Formylamino, Acetylamino, Oxalylamino, Benzoylamino, Tosylamino und
X, Y die angegebene Bedeutung haben,
   und anschließender Umwandlung der Gruppe G in 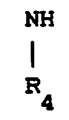 durch Reduktion oder Verseifung.

Verbindungen der Formel (XI) können gewonnen werden durch Umsetzung von 2-Halogen-5-nitro- benzolsulfinsäuren mit Halogenverbindungen
Hal-Q (XIV)

worin
Halogen = F, CI, Br, I und Q die oben angegebene Bedeutung hat,
oder durch Addition von 2-Halogen-5-nitrobenzolsulfinsäuren an alkylierte Ethylenoxide der Formel 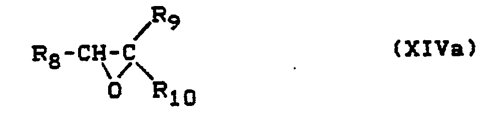 worin
R₈ = H oder C₁-C₄-Alkyl,
R₉ = H oder C₁-C₄-Alkyl,
R₁₀ = C₁-C₄-Alkyl, Aryl
   oder durch Addition von 2-Halogen-5-nitrobenzolsulfinsäuren an aktivierte Doppelbindungen enthaltende Verbindungen der Formel 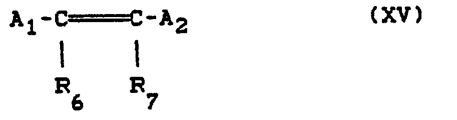 worin
A₁ = H oder aktivierender Substituent wie COOH, CN, COOC₁-C₄-Alkyl,
A₂ = aktivierender Substituent wie COOH, CN, CH=O, COOC₁-C₄-Alkyl, CONH₂, SO₃H, CsHs,
R₆, R₇ = H, C₁-C₄-Alkyl
oder worin A₁, A₂ mit der aktivierten Doppelbindung auch zu 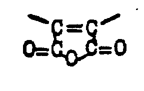 verknüpft sein können, und gegebenenfalls anschließender Umwandlung der primär entstandenen Sulfone der Formel 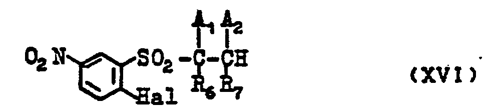 worin Halogen, Ai, A₂, R₆ und R₇ die oben angegebene Bedeutung haben,

in die Verbindungen der Formel (XI).

Es besteht außerdem die Möglichkeit, Phenyl- oder Hydroxygruppen in den Resten Q und/oder Y und/oder R₄, Rs in Verbindungen der Formel (IX) bei der nachfolgenden Ringschlußreaktion zu Verbindungen der Formel (V) in Schwefelsäure oder Oleum nachträglich mit S0₃H- oder OSOsH-Substituenten zu funktionalisieren.

Die Kondensation der Benzochinone der Formel (VII) mit den Amino-sulfon-Verbindungen der Formel (VIII) erfolgt am besten in wäßrigem oder wäßrig-organischem Medium unter Zugabe alkalischer Kondensationsmittel bei pH-Werten von 3-11, vorzugsweise 4-8, und Temperaturen von 20-90_{°}C, vorzugsweise 40-70_{°}C oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (IX) als schwerlösliche, braune Produkte aus.

Eine Variante zur Herstellung von Verbindungen der Formel (IX), besteht in der Addition von Amino-sulfon-Verbindungen der Formel (VIII) an 1,4-Benzochinone der Formel 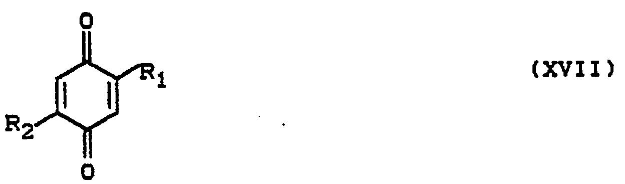 worin R₁ und R₂ die oben angegebene Bedeutung haben, und der Oxidation der primär entstehenden Addukte.

Der Ringschluß der Chinonkondensationsprodukte (IX) kann nach an sich bekannten Methoden, wie sie in den Deutschen Offenlegungsschriften 2 122 262, 2 124 080, 2 302 382, 2 344 781, 2 503 611, 2 823 828 und in der Britischen Patentschrift 2 019 872 erwähnt sind, insbesondere in konzentrierter Schwefelsäure und vor allem in Oleum mit SO₃-Gehalten von 1-50% bei Temperaturen von 10-80_{°}C gegebenenfalls mit Zusatz von Oxydationsmitteln wie Kalium- oder Ammoniumperoxiddisulfat oder organischen Peroxiden vorgenommen werden.

Die neuen Farbstoffe sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl-und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den für Reaktivfarbstoffe allgemein bekannten und üblichen Verfahren gefärbt oder bedruckt. Man erhält dann licht- und naßechte blaue Färbungen und Drucke.

Bei Temperaturangaben in den Beispielen handelt es sich um _{°}C. Die Formeln der wasserlöslichen Farbstoffe in der Beschreibung und in den Beispielen sind die der freien Säuren. Handelt es sich um Reaktivfarbstoffe, dann werden diese in der Regel in Form ihrer Alkalisalze, insbesondere der Lithium-, Natrium- oder Kaliumsalze, isoliert und angewandt.

In der EP-A 0 101 665 und der FR-A 2 297 232 werden Dioxazinfarbstoffe beschrieben, welche über ein Brückenglied gebundene Fluortriyzinylreste sowie direkt an das Chromophor gebundene Sulfogruppen aufweisen. In der EP-A 0 053 743 werden Dioxazinfarbstoffe des gleichen Typs, welche eine beliebige Reaktivgruppe über ein Brückenglied an das Chromophor gebunden enthalten, beschrieben.

### Beispiel 1:3-(2-Chlor-5-nitrophenylsulfonyl)-propionsäure

36 g Natrium-2-chlor-5-nitrobenzolsulfinat, 12,6 g festes Natriumhydrogencarbonat und 22,5 g Maleinsäureanhydrid werden in 250 ml Wasser 3 Stunden auf 100_{°}C erwärmt. Danach kühlt man ab und fügt nochmals 12,6 g Natriumhydrogencarbonat und 22,5 g Maleinsäureanhydrid zu. Nach weiteren 5 Stunden Rühren bei 100_{°}C saugt man die abgekühlte, schwach saure Reaktionsmischung ab. Der Filterkuchen wird in 300 ml Wasser bei 50_{°}C angerührt, auf 20_{°}C abgekühlt und erneut abgesaugt. Nach dem Trocknen resultieren 35,1 g 3-(2-Chlor-5-nitrophenyl-sulfonyl)-propionsäure.
iH-NMR (dₛ-DMSO):
_{T} = -2 bis-1,5 (breites COOH); 1,41 (d,1 H), 1,53 (dd, 1 H); 2,02 (d, 1H) 6,19 (t, CH₂); 7,36 (t, CH₂)

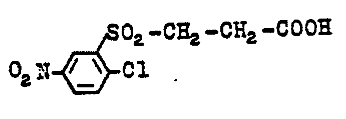

### Beispiel 2: 3-[2-(2(2-N-ß-Hydroxyethyl)aminoethyl)amino-5-nitrophenyl-sulfonyl]-propionsäure

29,5 g 3-(2-Chlor-5-nitrophenylsulfonyl)-propionsäure und 30 g 2-(2-Aminoethylamino)ethanol werden in 200 ml Isopropanol drei Stunden unter Rückfluß erwärmt. Die Reaktionsmischung wird abgekühlt und abgesaugt, und der Niederschlag zweimal mit 100 ml Wasser gewaschen und getrocknet. Man erhält 30,5 g blaßgelbe 3-[2-(2-ß-Hydroxyethyl)aminoethyl)-amino-5-nitrophenylsulfonyl)-propionsäure.
¹H-NMR (d₆-DMSO/CF₃CO₂H):
T = 1,38 (breites NH₂⁺); 1,61 (d, 1H); 1,75 (dd, 1H); 2,65 (t,NH); 2,88 (d, 1H), 6,2-6,4 (m, 6H); 6,80 (m, 2H); 6,90 (m, 2H); 7,35 (t, CH₂)

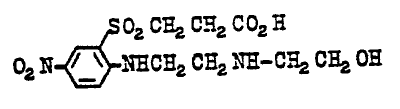

### Beispiel 3: 3-[2-(2-(N-β-Hydroxyethyl)-aminoethyl)-amino-5-amino-phenyl-sulfonyl)-propionsäure

28,9 g 3-[2-(2-(N-ß-Hydroxyethyl)-aminoethyl)-amino-5-nitro-phenylsulfonyl]-propionsäure werden in 200 ml Ethanol und 200 ml Wasser suspendiert. Man setzt in einem Autoklaven 1 g Raney-Nickel hinzu, drückt 7-10 bar Wasserstoff auf und heizt auf 60-65_{°}C, bis nach weiterem Aufdrücken von Wasserstoff kein Verbrauch mehr erfolgt. Nach beendeter Reduktion wird die erhaltene Lösung heiß vom Raney-Nickel geklärt, der Nickelrückstand mit 30 ml hießem Wasser gewaschen und die erhaltene Lösung gemäß Beispiel 4 umgesetzt.
1H-NMR (DCI)
_{T} = 2,25 (d, 1 H); 2,35 (dd, 1 H); 2,90 (d, 1 H); 6,05 (t, 2H); 6,19 (m, 4H); 6,55 (6, 2H); 6,65 (t, 2H); 7,15 (t, 2H)

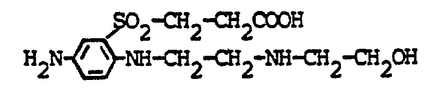

### Beispiel 4

Eine gemäß Beispiel 3 erhaltene Lösung von 24,8 g 3-[2-(2-(N-ß-Hydroxyethyl)-aminoethyl)-amino-5-amino-phenylsulfonyl]-propionsäure in 200 ml Ethanol und 230 ml Wasser wird mit konzentrierter Salzsäure auf pH 5,5 gestellt. Nach Zugabe von 9,2 g 2,3,5,6-Tetrachlorchinon erwärmt man das Reaktionsgemisch auf 40_{°}C und hält den pH-Wert mit 2n Sodalösung auf 5,5. Nach 2 Stunden steigert man die Temperatur auf 50_{°}C, nach 2 weiteren Stunden auf 60_{°}C. Das Reaktionsprodukt kristallisiert in braunen Nädelchen aus. Wenn die Kondensation beendet ist und keine Sodaaufnahme mehr erfolgt, wird das Reaktionsprodukt heiß abgesaugt, mit 100 ml 50%igem Ethanol und anschließend mit Wasser und zum Schluß mit Aceton gewaschen und bei 60_{°}C getrocknet. Das Produkt entspricht der Formel

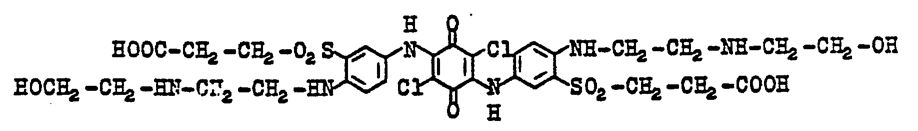

### Beispiel 5

15 g des nach Beispiel 4 erhaltenen Kondensationsprodukt werden bei 0-5_{°}C langsam in 80 g 90%ige Schwefelsäure eingetragen und 1 Stunde verrührt bis zur völligen Lösung. In die olivgrüne Lösung trägt man dann langsam 3,6 g Braunstein mit einem wirksamen Gehalt von 88% Mn0₂ ein. Man rührt das Reaktionsgemisch eine Stunde bei 0-5_{°}C und eine weitere Stunde bei 20-25°C nach. Die Farbe des Reaktionsgemisches ist von olivgrün nach violett umgeschlagen. Man gibt die violette Lösung in 800 g Eis-Wasser, saugt das ausgefallene Reaktionsprodukt ab, wäscht den Filterkuchen mit Wasser bis zur schwach sauren (pH 3-3,5) und sulfatfreien Reaktion und trocknet ihn bei 60_{°}C im Umluftschrank.

Man erhält 15,76 g einer Substanz der Formel 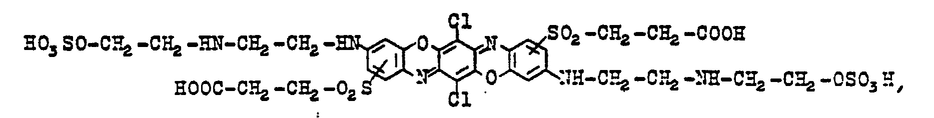 die sich in Wasser bei pH 7 mit klarer, blauer Farbe löst.

### Beispiel 6

10,0 g der Triphendioxazinverbindung aus Beispiel 5 werden in 200 ml Wasser durch Einstellen des pH-Wertes auf 7 gelöst und die Lösung auf 0-5_{°}C abgekühlt. Man tropft 4,5 g 2,4,6-Trifluor-5-chlorpyrimi- din zu und hält den pH-Wert des Reaktionsgemisches mit Sodalösung auf 8,5-9,0. Nach beendeter Kondensation stellt man das Reaktionsgemisch auf 6,0 und salzt den Farbstoff bei 20_{°}C mit 20 g Natriumchlorid aus. Der Niederschlag wird abgesaugt, mit 5%iger Natriumchloridlösung gewaschen und bei 50_{°}C im Umluftschrank getrocknet. Der erhaltene Farbstoff entspricht der Formel 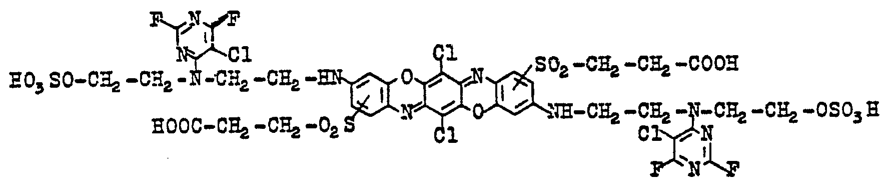 Er färbt Baumwolle aus langer Flotte in kräftigen klaren Blautönen. C. I. Indicator Number 13. λₘₐₓ = 614 nm in Wasser.

### Beispiel 7

Zu einer Lösung von 5,7 g 2-Aminobenzolsulfonsäure in 110 ml Wasser werden bei 0-5_{°}C 4,9 g Cyanurfluorid in 5 Minuten zugetropft und der pH-Wert mit 2n Sodalösung auf 3,5-4,0 gehalten. Nach beendeter Kondensation stellt man die Suspension der Reaktivkomponente vorsichtig auf pH 6 und läßt dann eine auf pH 7 gestellte Lösung von 10,0 g Triphendioxazinkomponente des Beispiels 5 in 200 ml Wasser zulaufen. Während der Zugabe hält man das Reaktionsgemisch mit Sodalösung auf pH 9 und die Temperatur auf 5-10_{°}C. Ist nach einigen Stunden der Sodaverbrauch zum Stillstand gekommen und chromatographisch das eingesetzte Triphendioxazin nicht mehr nachweisbar, stellt man die erhaltene Lösung auf pH 6 und erwärmt sie auf 20_{°}C. Der Reaktivfarbstoff wird mit 50 g Natriumchlorid ausgesalzen, die Fällung abgesaugt und mit 10%iger Natriumchloridlösung gewaschen. Nach Anteigen mit Phosphatpuffer vom pH 6 wird der Farbstoff bei 50_{°}C im Umluftschrank getrocknet. Er entspricht der Formel 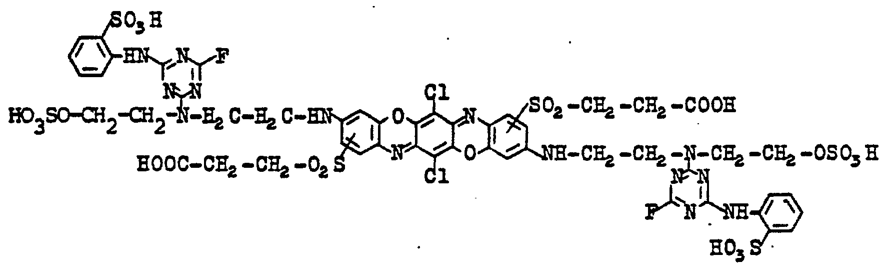 und färbt Baumwolle aus langer Flotte in klaren blauen Tönen. C.I.Indicator Number 13. Amax = 627 nm in Wasser.

### Beispiel 8: 3-[2-(2-Aminoethyl)amino-5-nitrophenylsulfonyl]-propionsäure

29,5 g 3-(2-Chlor-5-nitrophenylsulfonyl)-propionsäure und 15 g 1,2-Diaminoethan werden in 150 ml Isopropanol zwei Stunden unter Rückfluß gekocht. Die Reaktionsmischung wird auf 0_{°}C abgekühlt und abgesaugt. Die Isolierung wird in 100 ml Wasser angerührt, auf pH 3,5 gestellt und mit 15 g Kochsalz ausgesalzen. Das ausgefallene Betain wird abgesaugt und getrocknet. Die Ausbeute an 3-[2-(2-Aminoethyl)amino-5-nitrophenylsulfonyl]-propionsäure beträgt 28,5 g.
1H-NMR (dₛ-DMSO/CF₃C0₂H):
T = 1,31 (d, 1 H); 1,60 (dd, 1 H); 2,80 (breites NH); 2,95 (d, 1 H); 5,95 (m, 2H); 6,20 (m, 2H); 6,32 (m, 2H); 6,90 (m, 2H).

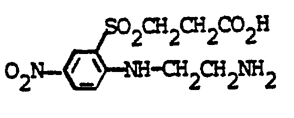

### Beispiel 9: 3-[5-Amino-2-(2-aminoethyl)-aminophenylsulfonyl]-propionsäure

27,0 g 3-[2-[2-Aminoethyl)-amino-5-nitro-phenylsulfonyl]-propionsäure werden in 150 ml Wasser und 150 ml Ethanol suspendiert. Man setzt in einem Autoklaven 1 g Nickel zu der Suspension, drückt 60-70 bar Wasserstoff auf und heizt 60_{°}C auf. Man rührt einige Zeit weiter, bis kein weiterer Wasserstoff mehr aufgenommen wird. Nach Entspannen wird die erhaltene Lösung bei 70_{°}C mit 1 g Aktivkohle geklärt, der Klärrückstand mit 20 ml heißem Wasser gewaschen und die vereinigten Filtrate gemäß Beispiel 10 umgesetzt.
iH-NMR (DCI) 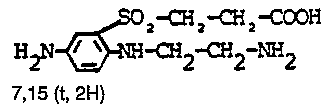 = 2,25 (d, 1 H); 2,35 (dd, 1 H); 2,90 (d, 1 H); 6,20 (m, 4H); 6,60 (t, 2H)

### Beispiel 10

Die nach Beispiel 9 erhaltene Lösung von 23,2 g 3-[5-Amino-2-(2-amino-ethyl)-aminophenylsulfonyl]-propionsäure in 150 ml Ethanol und 170 ml Wasser wird mit konzentrierter Salzsäure von pH 7 auf 5,5 gestellt. Man setzt 9,9 g 2,3,5,6-Tetrachiorchinon zu, erwärmt auf 40_{°}C und hält den pH-Wert mit Sodalösung auf 5,5. Nach 2 Stunden steigert man die Temperatur auf 50_{°}C, nach weiteren 2 Stunden auf 60_{°}C. Wenn keine Sodaaufnahme mehr feststellbar ist, wird das in braunen Nadeln kristallisierte Reaktionsprodukt heiß abgesaugt, mit 100 ml 50%igem Ethanol, sodann mit Wasser und zum Schluß mit Aceton gewaschen. Man erhält nach Trocknen bei 60_{°}C eine in konzentrierter Schwefelsäure mit olivgrüner Farbe lösliche Substanz der Formel

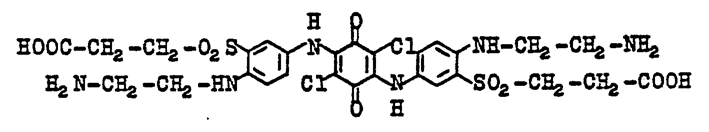

### Beispiel 11

15 g des nach Beispiel 10 erhaltenen Kondensationsproduktes werden bei 0-5_{°}C langsam in 70 g 90%ige Schwefelsäure eingetragen. Man verrührt das Gemisch eine Stunde bis zur völligen Lösung. In die obige olivgrüne Lösung werden 4,0 g Braunstein mit einem wirksamen Gehalt von 88% Mn0₂ langsam eingetragen, wobei man die Temperatur weiter auf 0-5°C hält. Die Farbe des Reaktionsgemisches schlägt allmählich von olivgrün nach blauviolett um. Man läßt noch eine Stunde bei 0-5°C und anschließend eine Stunde bei 20-25°C rühren und gibt dann die Lösung in 700 g Eis-Wasser. Das ausgefallene Produkt wird abgesaugt, mit Wasser schwefelsäurefrei gewaschen und im Umluftschrank bei 60°C getrocknet. Man erhält eine Substanz der Formel 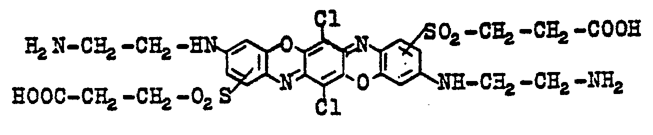 die sich in Wasser auf Zusatz von Natronlauge mit klarem Blauton löst.

### Beispiel 12

9,5 g 2-Aminobenzol-1,4-disulfonsäure werden in 90 ml Wasser durch Zusatz von Sodalösung bis zum pH-Wert 4 gelöst. Zu der Lösung läßt man bei 0-5_{°}C 5,1 g Cyanurfluorid in 10 Minuten gleichmäßig zutropfen, hält durch Zusatz weiterer Sodalösung den pH-Wert auf 4,0-4,5, rührt anschließend noch 30 Minuten nach und stellt dann den pH-Wert auf 5,5.

8,9 g Triphendioxazinverbindung aus Beispiel 11 werden in 180 ml Wasser, 18 ml Caprolactam und 6,5 g 15%iger Natronlauge gelöst.

Diese Lösung und die Lösung der oben hergestellten Reaktivkomponente läßt man in 50 ml vorgelegtes Eis-Wasser bei 0-5_{°}C in gleichen Anteilen so eintropfen, daß der pH-Wert im Reaktionsgemisch auf 9,0 gehalten wird. Falls notwendig, wird dieses durch zusätzliche Eindosierung von 2n Natronlauge erreicht. Nach Vereinigung der beiden Lösungen wird der pH-Wert weiterhin auf 9,0 gehalten und der Ansatz noch mehrere Stunden bei 0-5_{°}C gerührt, bis die Kondensation beendet ist. Man hebt die Temperatur auf 20_{°}C an, salzt aus der Lösung den Farbstoff mit Natriumchlorid aus, saugt ihn ab und wäscht ihn mit Natriumchloridlösung. Der Filterkuchen wird mit etwas Phosphatpufferlösung (pH = 6) vermengt und bei 50_{°}C im Vakuum getrocknet. Man erhält einen Farbstoff der Formel 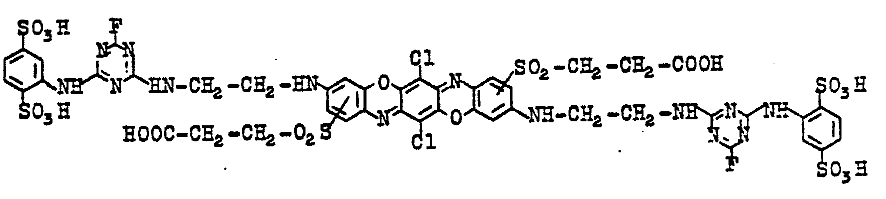 der Cellulosefasern aus langer Flotte in klaren blauen Tönen färbt. C.I. Indicator Number 13. λₘₐₓ = 614 nm in Wasser.

### Beispiel 13: Benzyl-(2-chlor-5-nitrophenyl)-sulfon

24,4 g Natriumsalz der 2-Chlor-5-nitrobenzolsulfinsäure werden in 150 ml Ethanol unter Rückflußtemperatur gelöst und langsam mit 35 g Benzylchlorid versetzt. Nach 10 bis 12 Stunden unter Rückflußbedingungen läßt man auf 60°C abkühlen und trennt das ausgefallene Salz durch Filtration ab. Aus der auf 0_{°}C abgekühlten Lösung kristallisieren 24,1 g farbloses Benzyl-(2-chlor-5-nitrophenyl)-sulfon.
1H-NMR (d₆-DMSO):
T = 1,59 (dd, 1 H); 1,70 (d, 1 H); 2,05 (d, 1 H); 2,80 (m, 5H); 5,12 (s, CH₂).

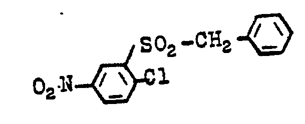

### Beispiel 14: [2-(2-Aminoethyl)amino-5-nitrophenyi]-benzylsulfon

16,0 g Benzyl-(2-chlor-5-nitrophenyl)sulfon und 12,0 g 1,2-Diaminoethan werden in 100 ml Isopropanol eine Stunde unter Rückfluß erwärmt. Die Reaktionsmischung wird abgekühlt, abgesaugt, die Isolierung mit 50 ml Wasser gewaschen und getrocknet. Man erhält 19,2 g blaßgelbes [2-(2-Aminoethyl)-amino-5-nitrophenyl]-benzylsulfon.
iH-NMR (dₛ-DMSO):
T = 1,87 (dd, 1H); 1,96 (d, 1 H); 2,75 - 2,90 (m, 5H + NH); 3,13 (d, 1H); 5,45 (s, CH₂); 6,84 (t, CH₂); 6,5-6,9 (breites NH₂); 7,27 (t, CH₂).

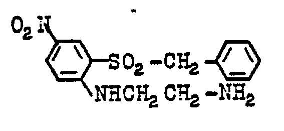

### Beispiel 15: [5-Amino-2-(2-aminoethyl)-aminophenyl]-benzylsulfon

20,0 g [2-(2-Aminoethyl)-amino-5-nitrophenyl]-benzylsulfon werden in 100 ml Ethanol und 100 ml Wasser suspendiert. Man setzt in einem Autoklaven 1 g Raney-Nickel hinzu, drückt 40 bar Wasserstoff auf und heizt auf 60_{°}C, bis nach weiterem Aufdrücken von Wasserstoff kein Verbrauch mehr erfolgt. Nach beendeter Reduktion wird die erhaltene Lösung heiß vom Raney-Nickel geklärt, der Nickelrückstand mit 40 ml heißem Wasser gewaschen und die erhaltene Lösung gemäß Beispiel 16 umgesetzt.

### Beispiel 16

Die nach Beispiel 15 erhaltene Lösung von 17,4 g [5-Amino-2-(aminoethyl)-aminophenyl]-benzylsulfon in 100 ml Ethanol und 140 ml Wasser wird mit Salzsäure auf pH 6 gestellt. Man setzt 7,0 g 2,3,5,6-Tetrachlorchinon zu, erwärmt auf 45_{°}C und hält den pH-Wert ständig mit 2n Sodalösung auf 5,5-6,0. Man steigert nach 2 Stunden die Temperatur auf 55_{°}C, nach einer weiteren Stunde auf 65°C. Nach Beendigung der Reaktion saugt man das kristalline Produkt bei 20_{°}C ab, wäscht es mit einer Mischung von Ethanol und Wasser und anschließend mit Wasser und trocknet es bei 60_{°}C im Umluftschrank. Das braune Produkt entspricht der Formel

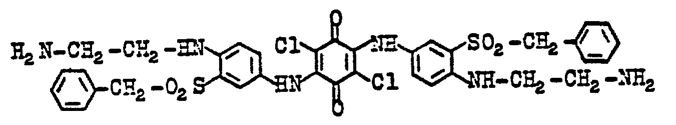

### Beispiel 17

15,2 g des nach Beispiel 16 erhaltenen Kondensationsproduktes werden bei 0-5_{°}C langsam in 45 ml 20%iges Oleum eingetragen. Man läßt die Temperatur auf 20_{°}C ansteigen und trägt innerhalb von 1 Stunde bei 20_{°}C 10,5 g Kaliumperoxodisulfat ein. Nach dem Eintragen rührt man eine weitere Stunde und gibt dann die blaue Lösung auf 450 g Eis-Wasser. Das ausgefallene Produkt wird abgesaugt und mit Wasser gewaschen. Man rührt den Filterkuchen in 200 ml Wasser an, stellt den pH-Wert mit Natronlauge auf 8 ein, salzt mit 15 g Natriumchlorid aus, saugt ab und wäscht mit 5%iger Natriumchloridlösung. Das bei 60_{°}C getrocknete Produkt entspricht der Formel

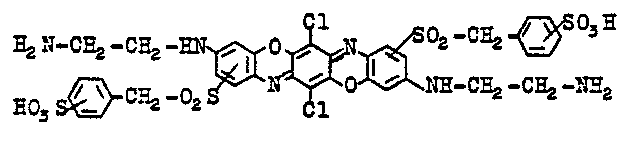

### Beispiel 18

6,1 g 2-Aminobenzol-1,4-disulfonsäure werden in 50 ml Wasser bei pH = 6 gelöst. Man setzt zu dieser Lösung 4,75 g Cyanurchlorid und 10 ml Aceton und hält bei 20_{°}C den pH-Wert mit Sodalösung auf 5,5, bis eine klare Lösung entstanden und die Kondensation beendet ist.

Man läßt zu der Reaktivkomponente eine auf pH 9 gestellte Lösung von 11,0 g Triphendioxazinkomponente aus Beispiel 17 in 110 ml Wasser zulaufen und hält den pH-Wert mit verdünnter Natronlauge auf 9. Wenn die Umsetzung nach mehreren Stunden beendet ist, stellt man den pH-Wert der Lösung auf 7, salzt den gebildeten Farbstoff mit 80 g Natriumchlorid aus, saugt ihn ab, wäscht ihn mit 25%iger Natriumchloridlösung und trocknet ihn bei 60_{°}C im Umluftschrank.

Der Farbstoff entspricht der Formel 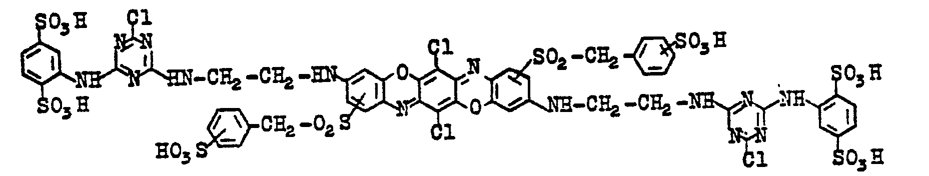 Mit ihm lassen sich Cellulosefasern in kräftigen klaren Blautönen färben und bedrucken. C.I. Indicator Number 13. λₘₐₓ = 614 nm in Wasser.

### Beispiel 19

Setzt man eine Lösung von 11,0 g Triphendioxazinkomponente aus Beispiel 17 in 110 ml Wasser (pH 9) mit der Lösung einer Reaktivkomponente, die aus 8,1 g 2-Aminobenzol-1,4-disulfonsäure und 4,8 g Cyanurfluorid in 80 ml Wasser bei 0-5_{°}C und pH 4,0 hergestellt war, in analoger Weise, wie in Beispiel 12 beschrieben, bei pH 9,0 um, so erhält man nach Aussalzen, Isolieren und Trocknen einen Farbstoff der Formel 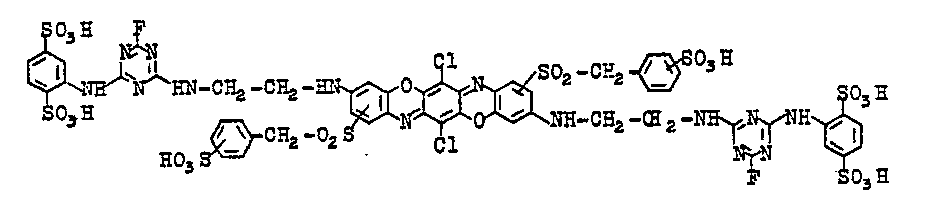 der Baumwolle in klaren Blautönen färbt. C.I. Indicator Number 13. Xₘₐₓ = 614 nm in Wasser.

### Beispiel 20

Setzt man in analoger Weise, wie in Beispiel 12 beschrieben, eine Lösung von 10,0 g Triphendioxazinkomponente des Beispiels 17 in 120 ml Wasser (pH = 9) mit der Suspension der Reaktivkomponente um, die aus 5,1 g 2-Aminobenzolsulfonsäure und 4,2 g Cyanurfluorid hergestellt wird, indem man Farbstofflösung und Reaktivkomponente gleichzeitig allmählich in 50 ml Wasser eingibt und im Reaktionsgemisch den pH-Wert auf 9,0, die Temperatur auf 0-5_{°}C hält, dann wird nach Isolieren und Trocknen ein Farbstoff der Formel 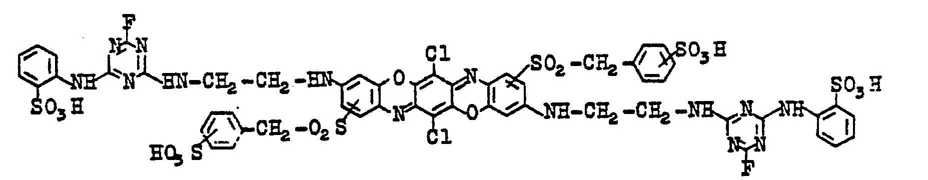 erhalten, der ebenfalls Cellulosefasern in klaren Blautönen färbt C.I. Indicator Number 13. λₘₐₓ = 624 nm in Wasser.

Weitere Cellulosefasern in klaren Blautönen (C.I. Indicator Number 13) färbende Reaktivfarbstoffe erhält man, wenn man in analoger Weise zu den vorhergehenden Beispielen die in der nachfolgenden Tabelle, Spalte 1, aufgeführten Aminosulfone mit den Chinonen der Spalte 2 im Molverhältnis 2:1 kondensiert, die erhaltene Kondensationsprodukte in 90-100%iger Schwefelsäure oder Oleum unter Zusatz von Oxydationsmitteln wie Mn0₂ oder Peroxodisulfaten in die Triphendioxazine der Spalte 3 umgewandelt und diese mit den Reaktivkomponenten der letzten Spalte kondensiert.

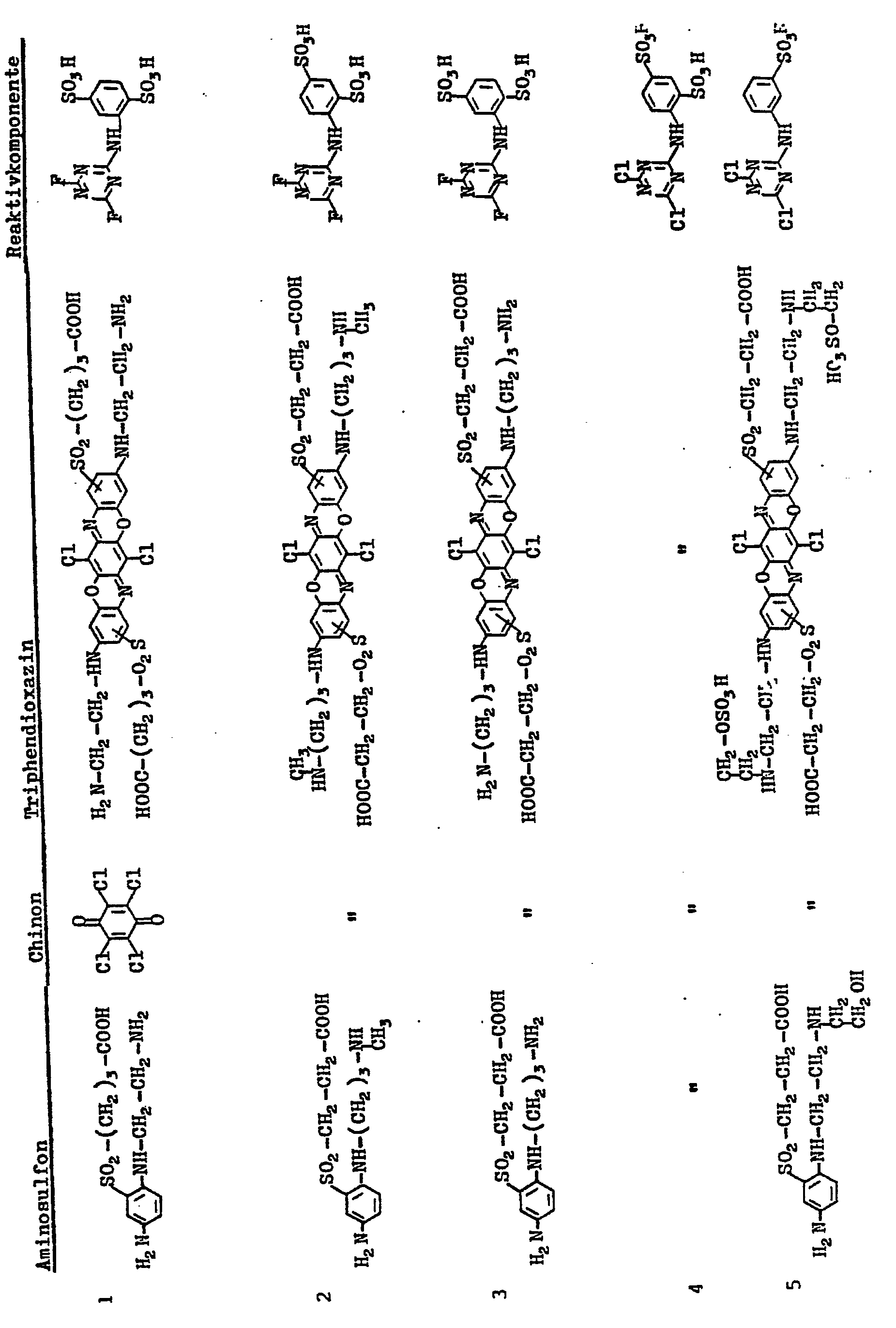

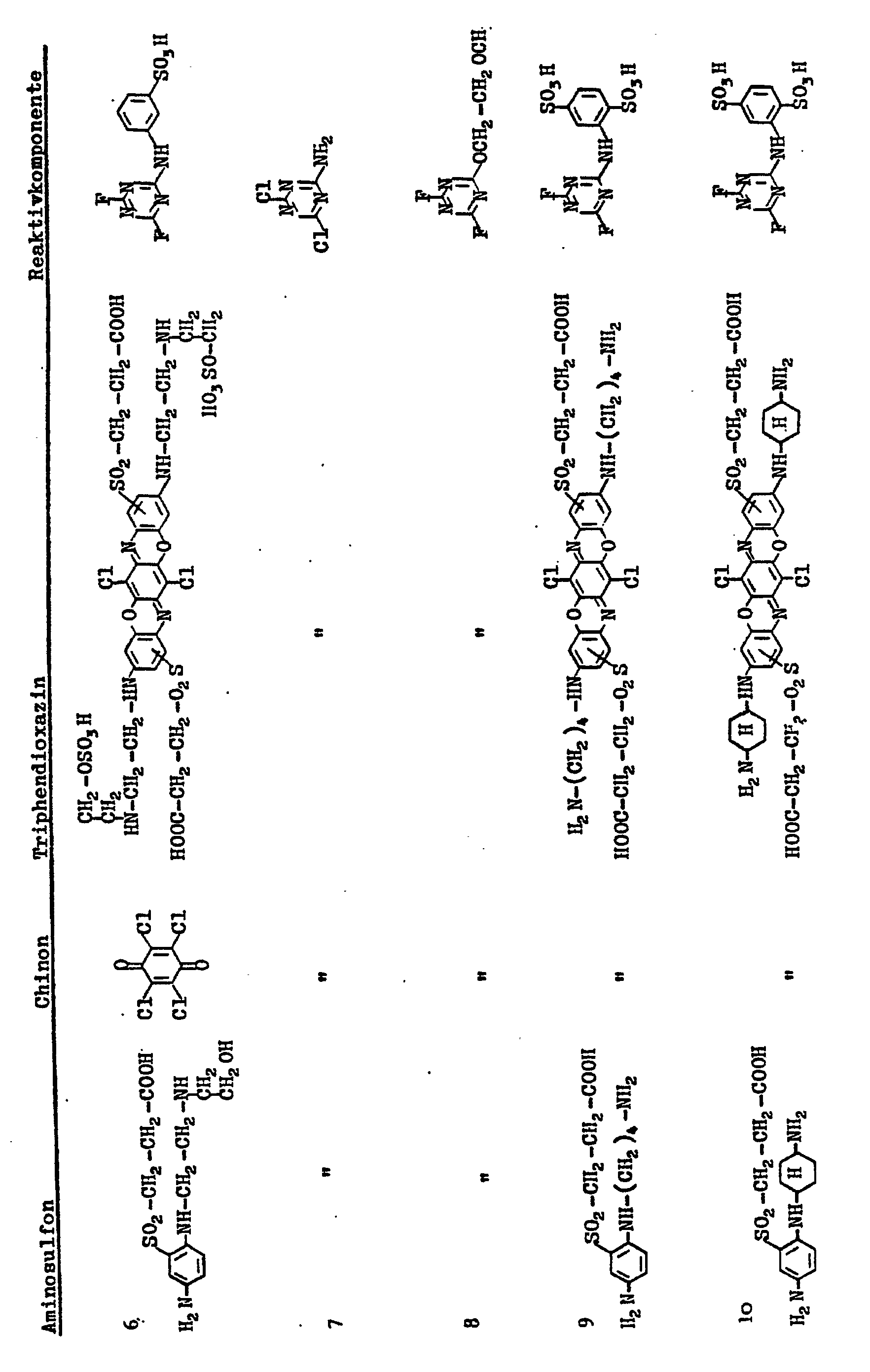

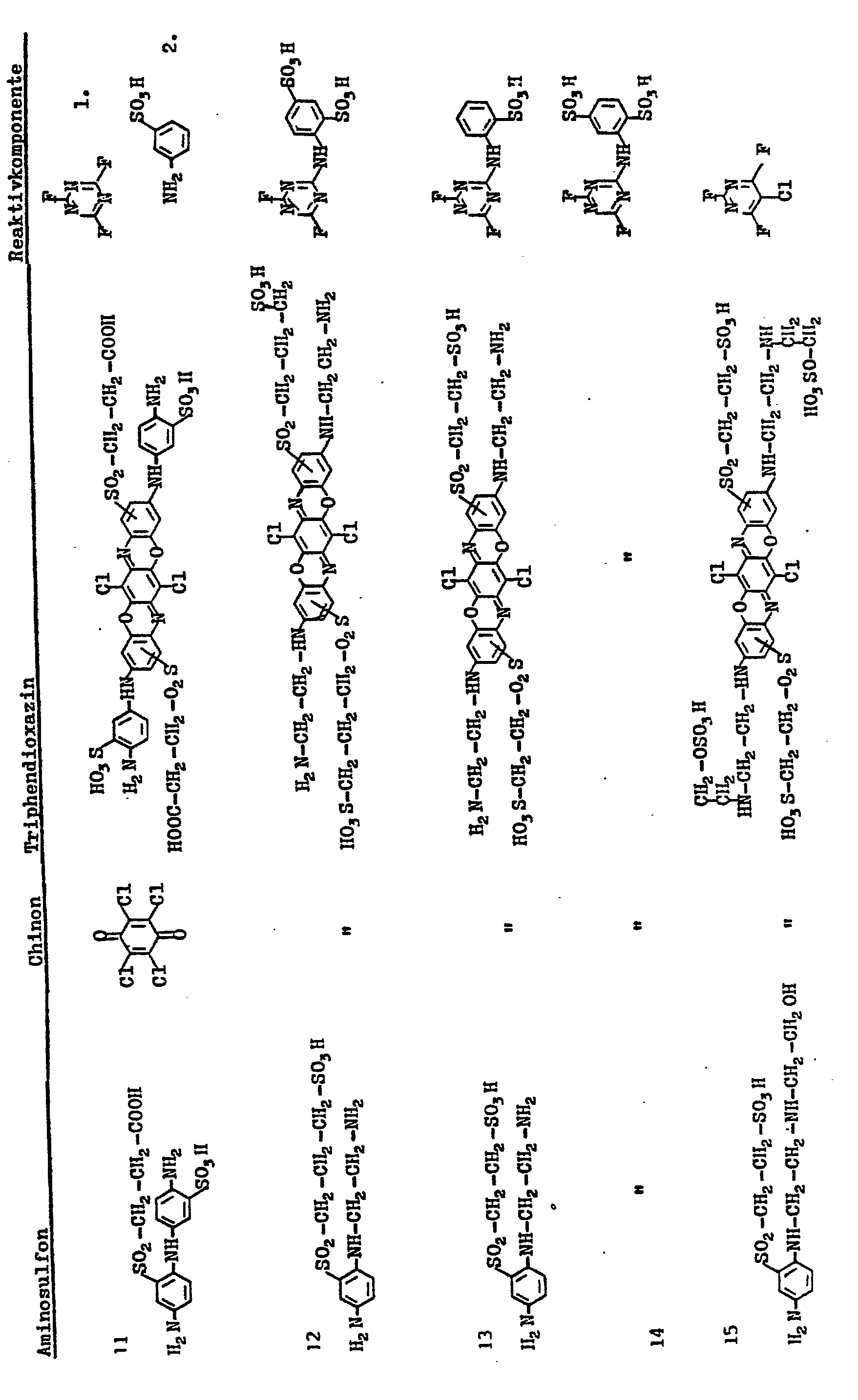

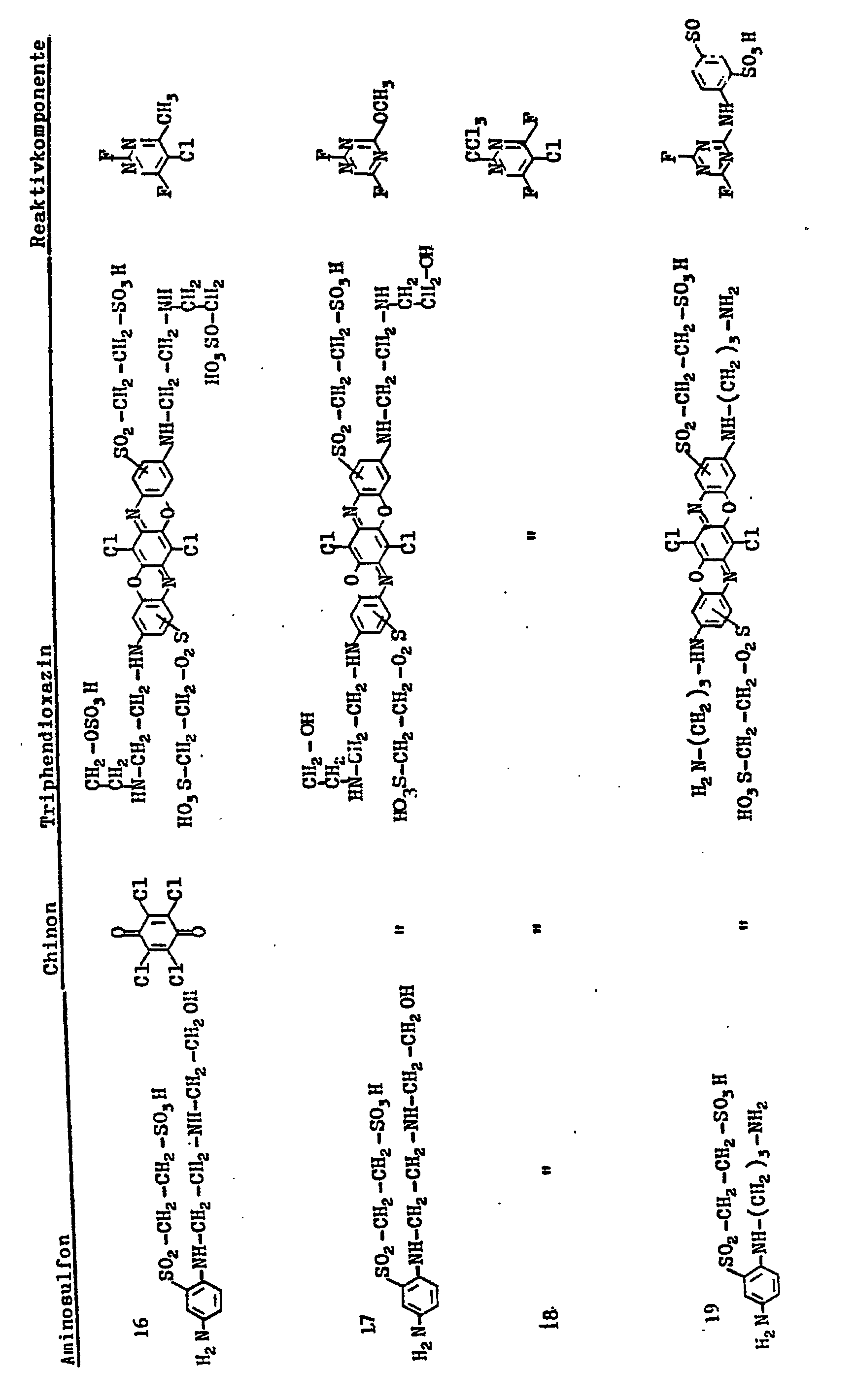

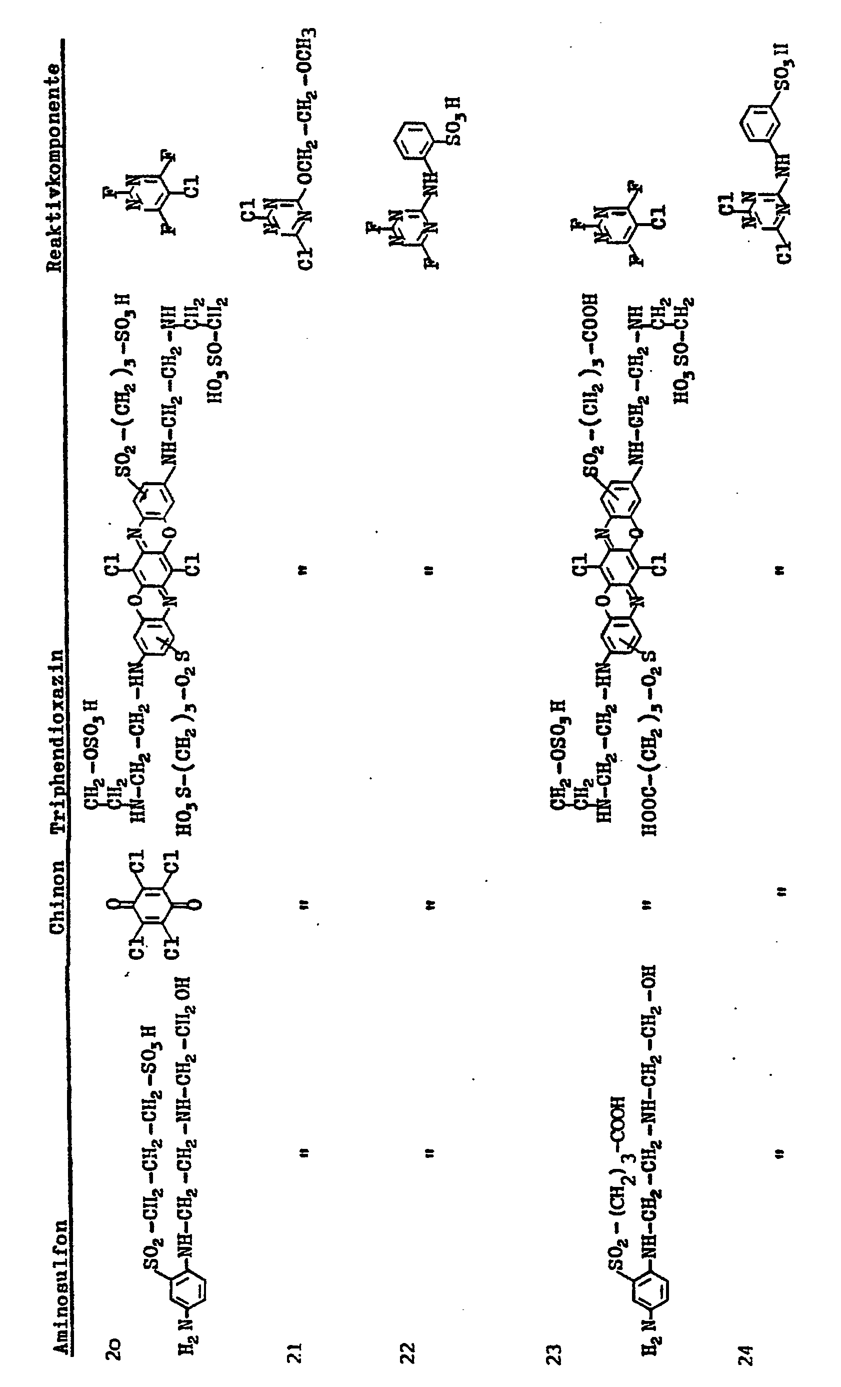

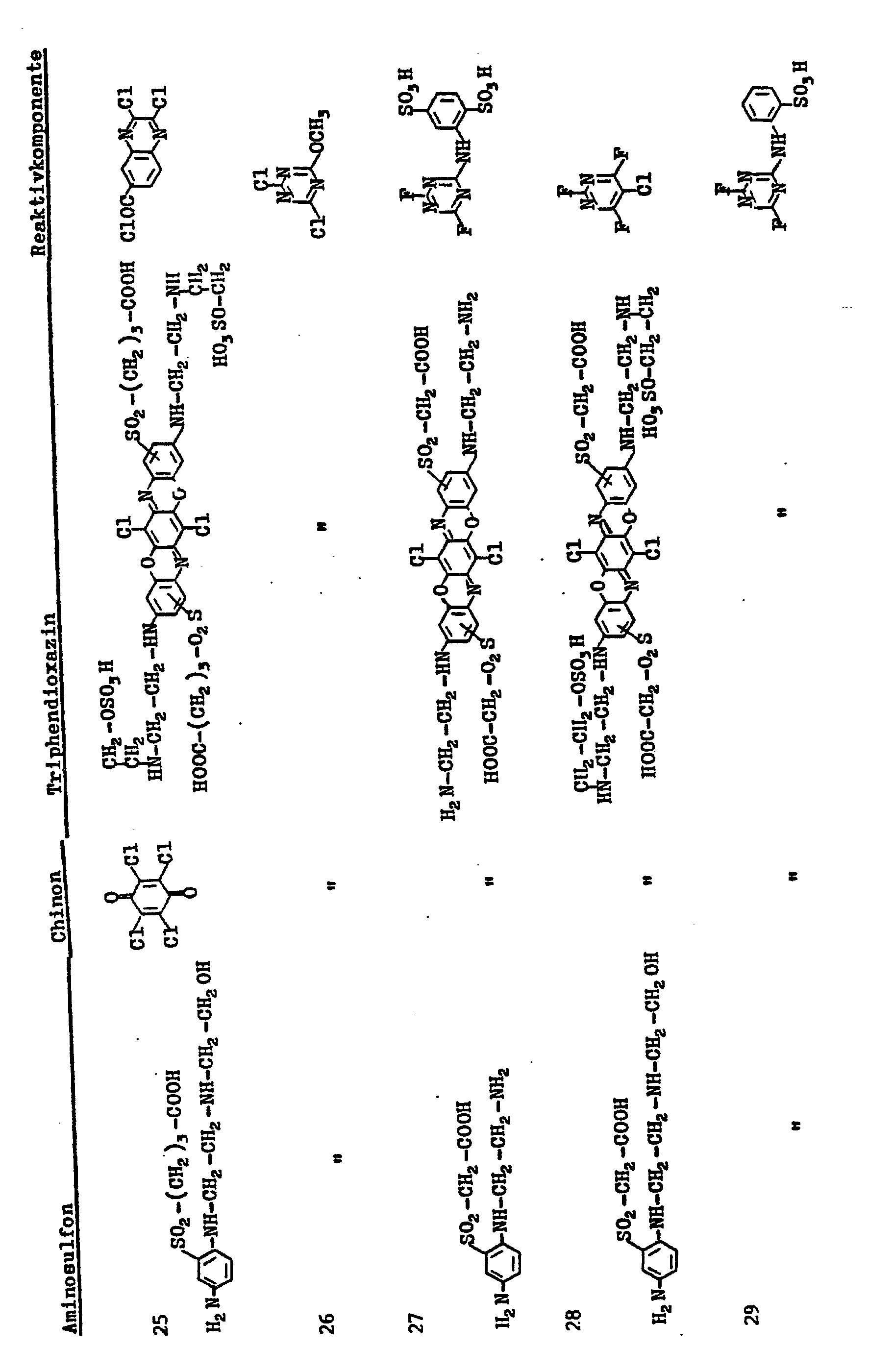

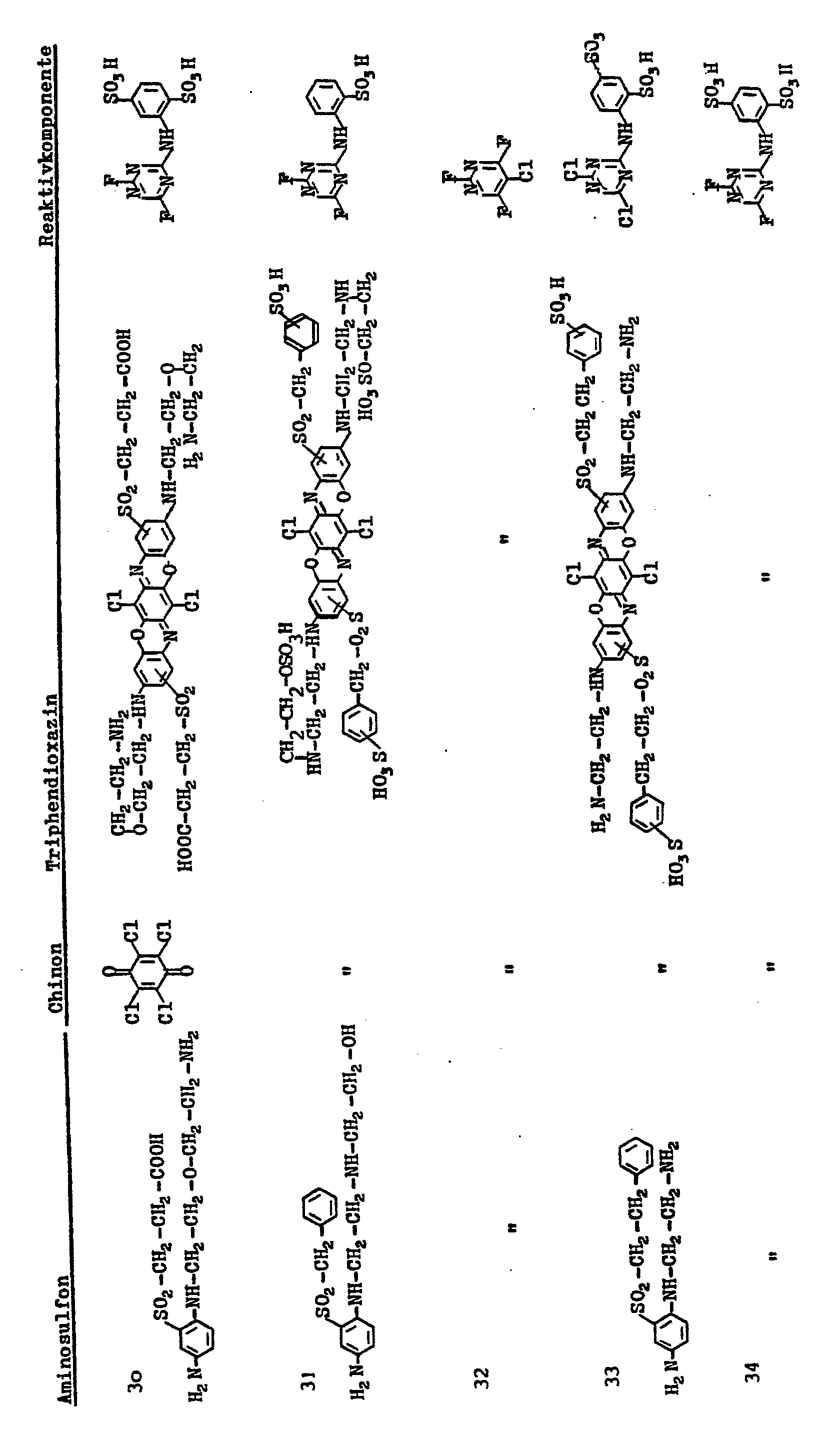

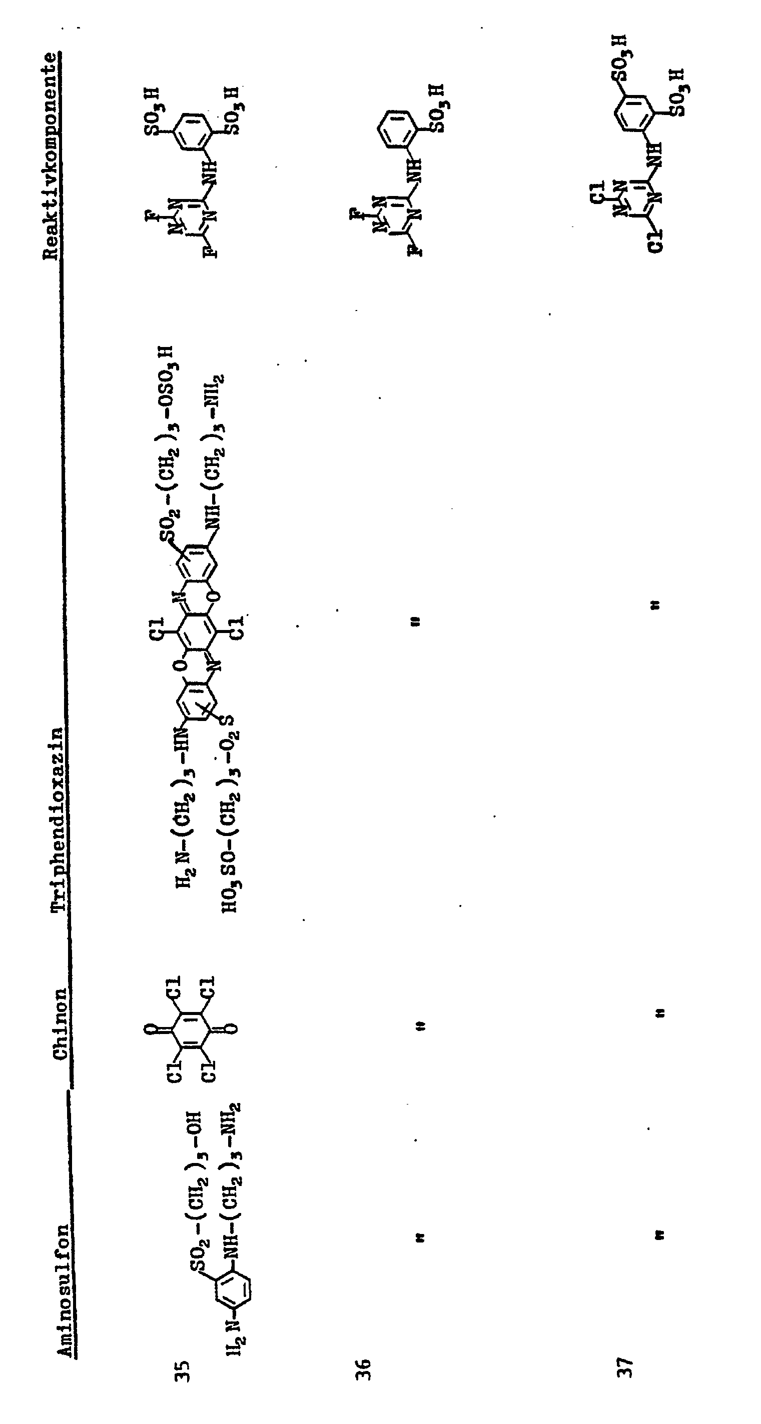

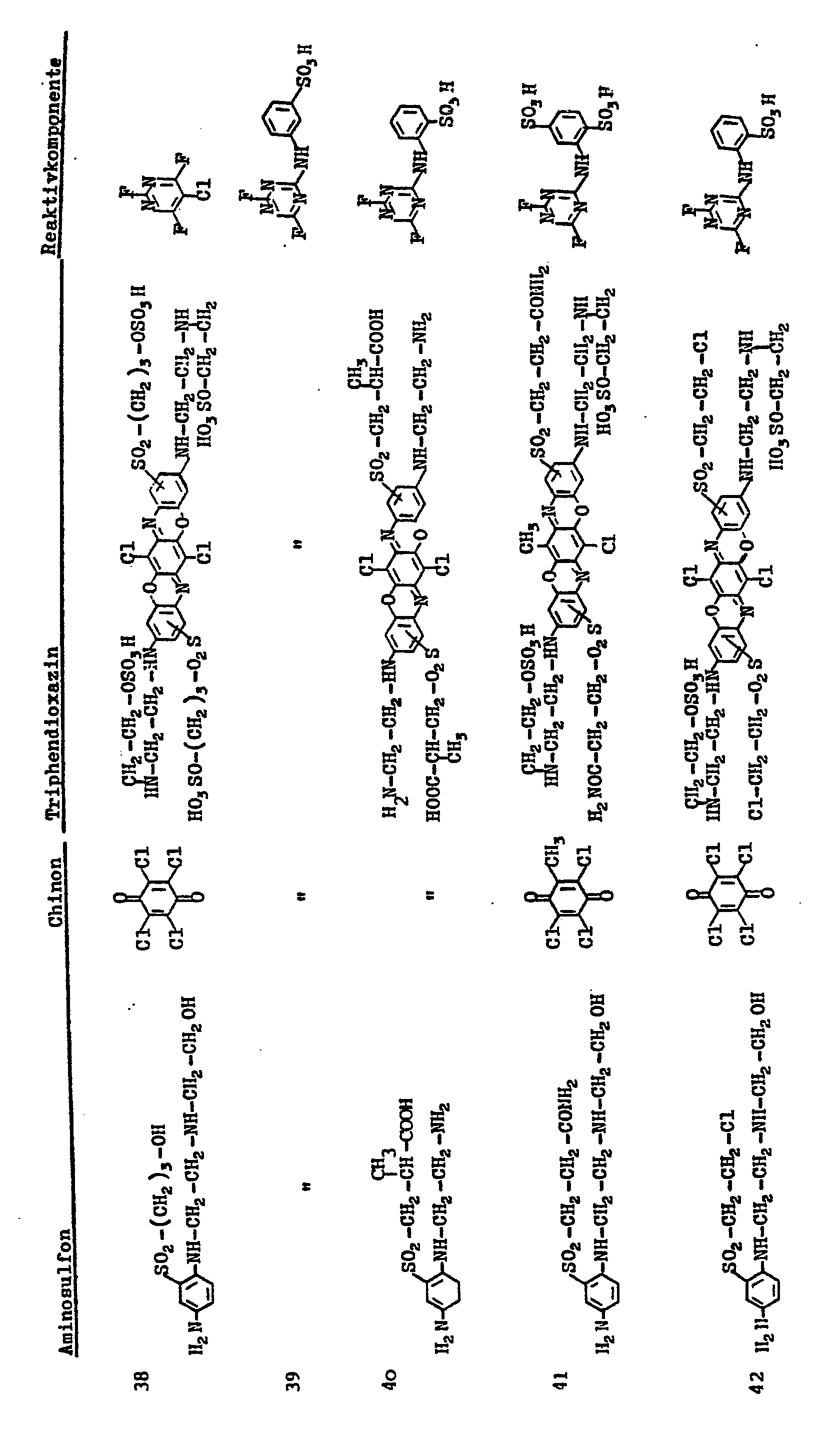

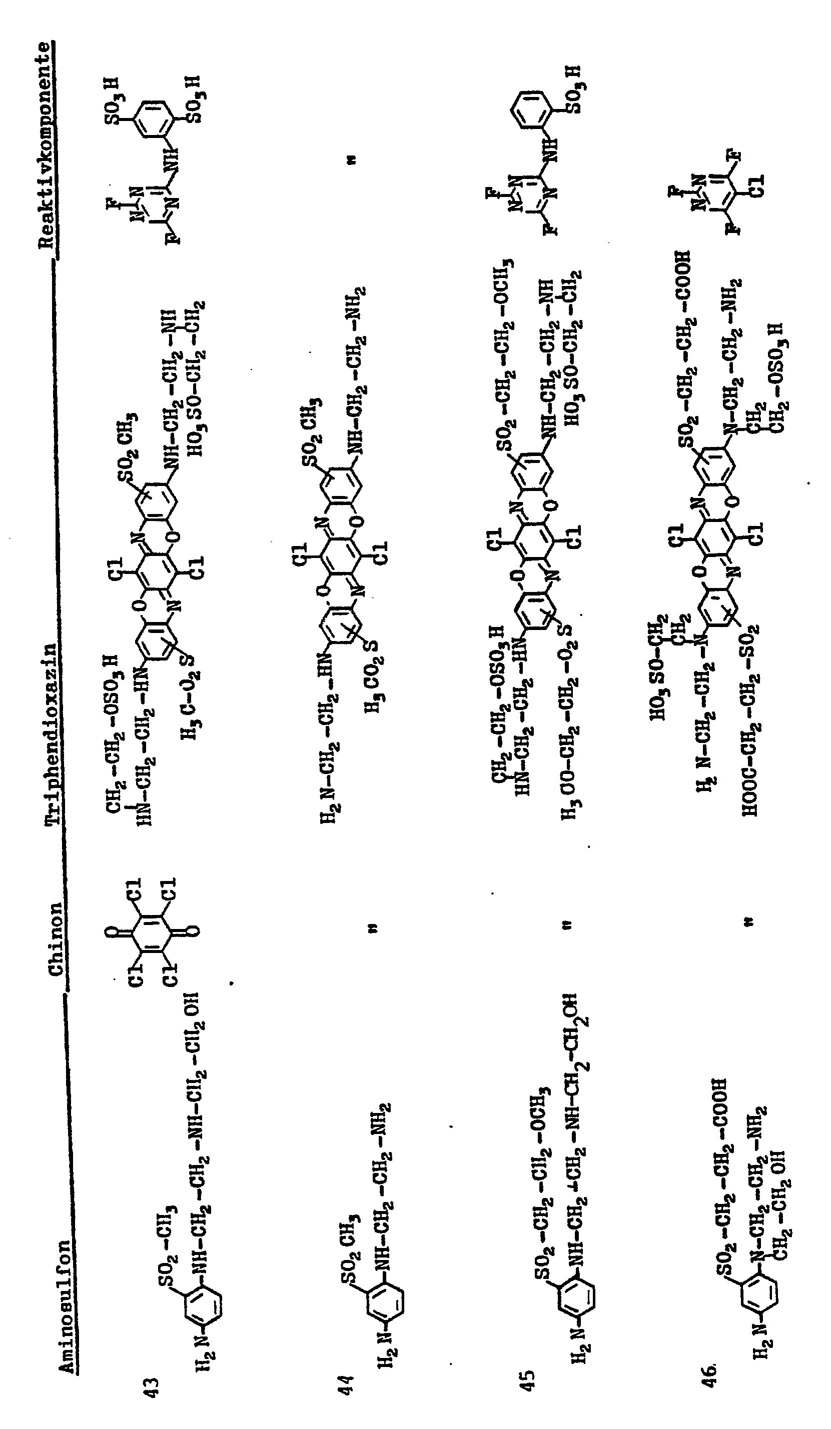

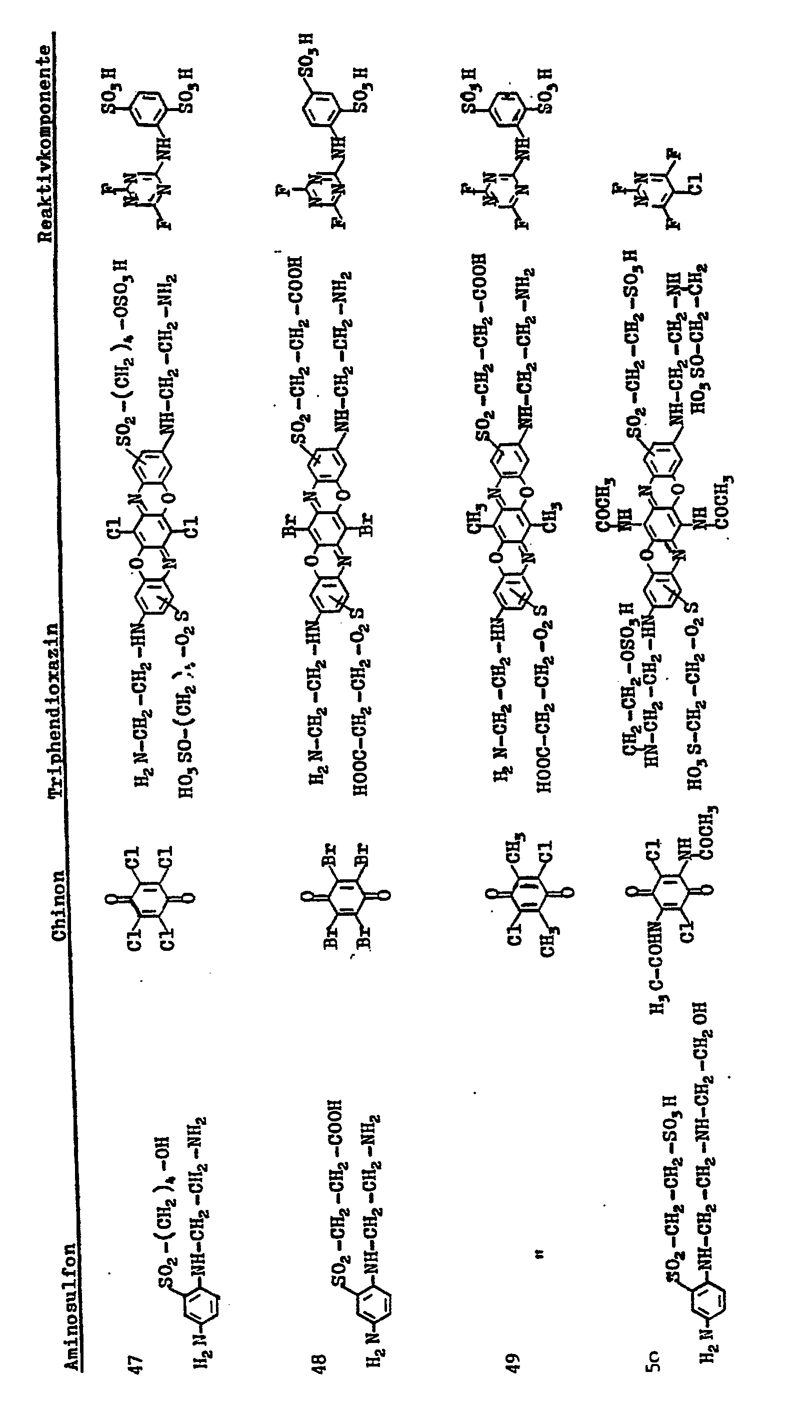

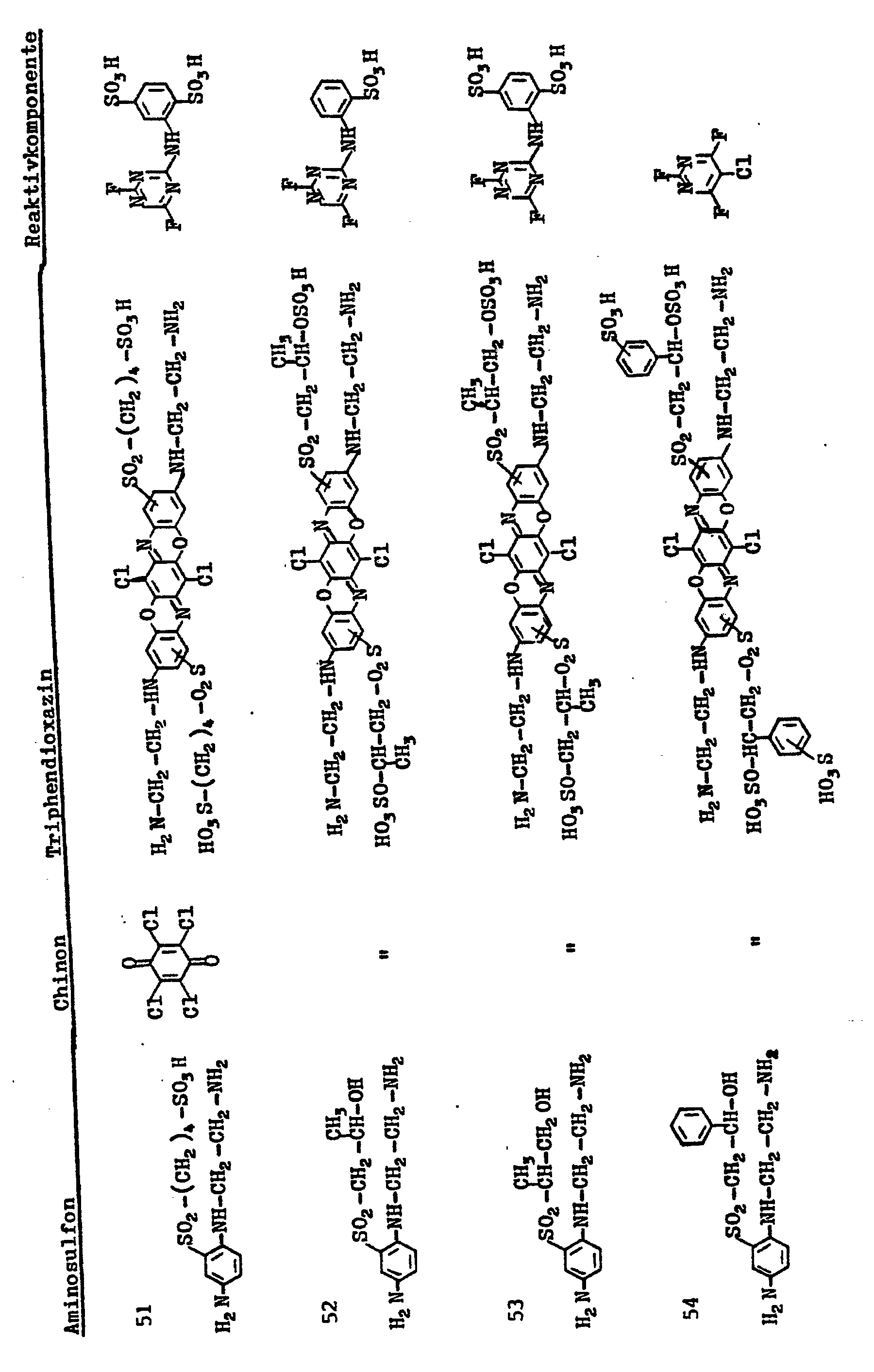

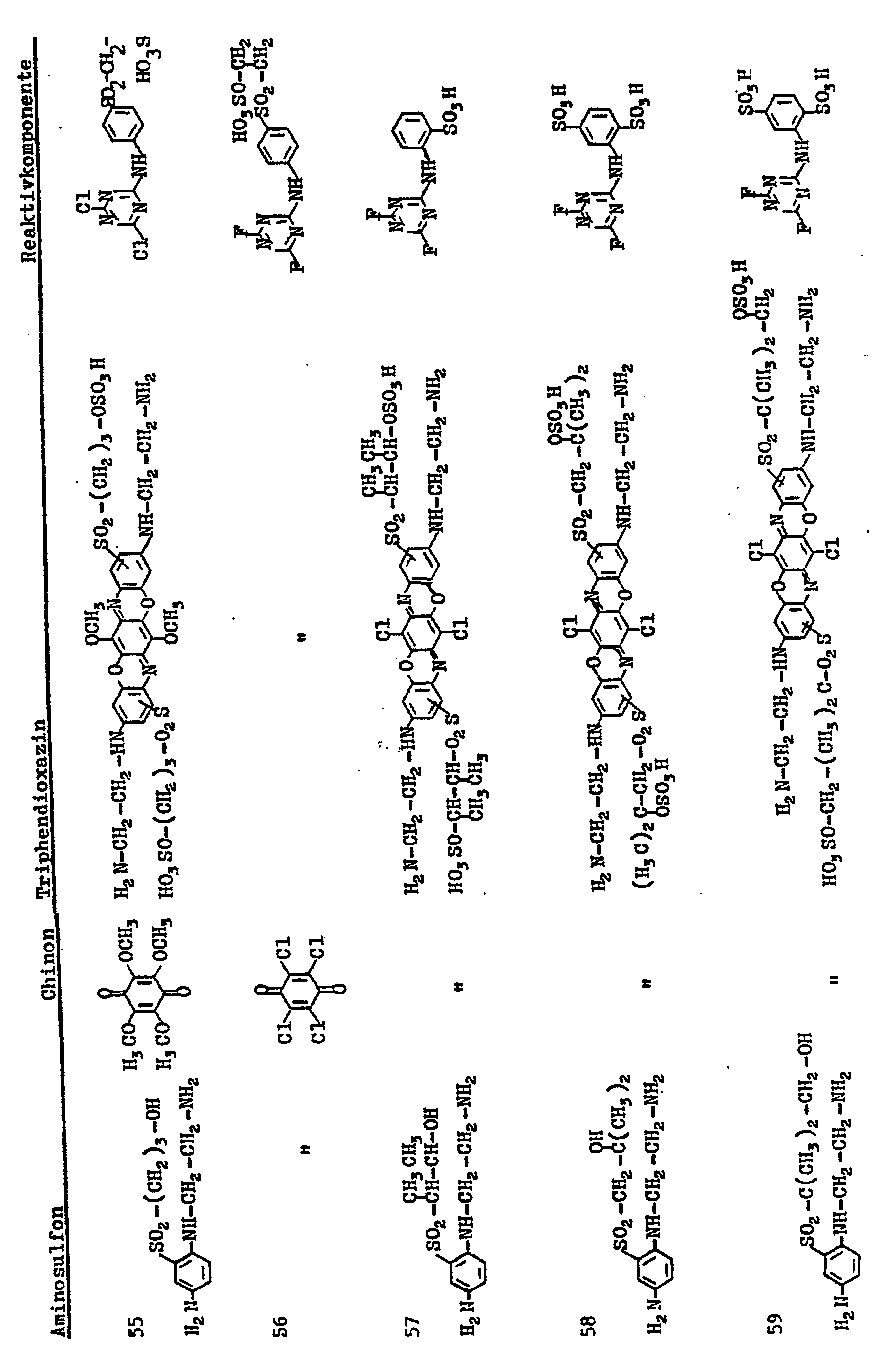

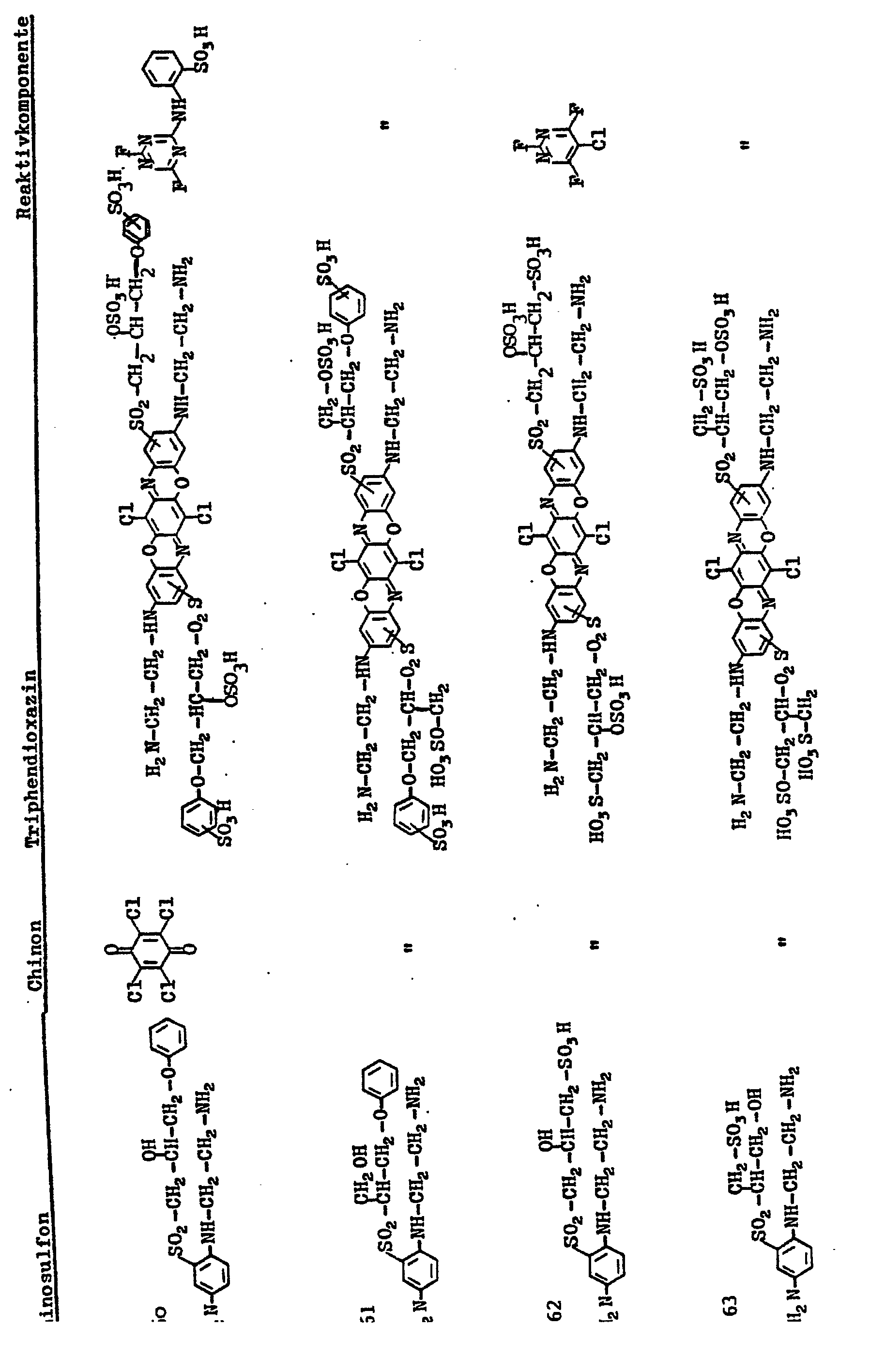

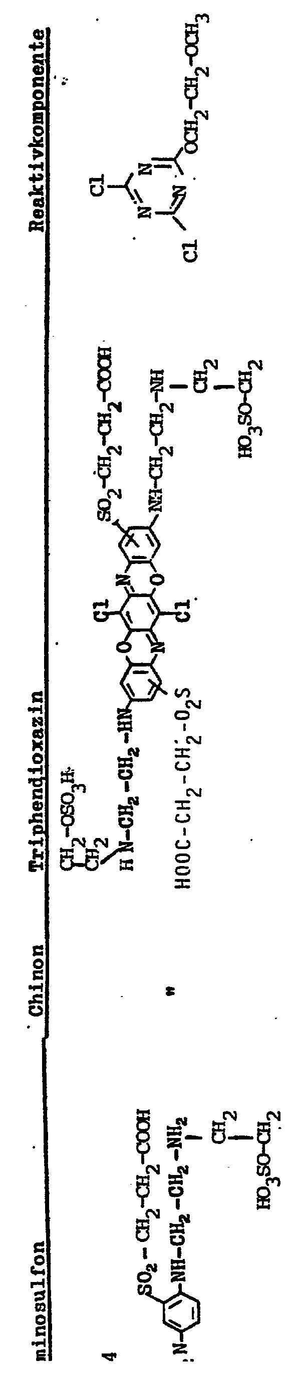

### Beispiel 21: (2-Chlor-5-nitrophenyl-(2-hydroxypropyl)-sulfon

150 g (0,5 mol) 81%iges Natrium-2-chlor-5-nitrobenzolsulfinat werden in 300 ml Wasser bei pH 8-8,5 und 60_{°}C vorgelegt. Dazu tropft man über einen Zeitraum von ca. 8 Stunden 200 ml Propylenoxid und hält dabei den pH der Reaktionsmischung mit 20%iger Schwefelsäure konstant zwischen 7,5 und 9,5. Nach dem Abkühlen saugt man ab und wäscht zweimal mit 200 ml Wasser nach. Trocknen bei 70°C i. Vak. liefert 118 g farbloses (2-Chlor-5-nitrophenyl)-(2-hydroxypropyl)-sulfon.
¹H-NMR (d₆-DMSO): T = 1,39 (d, 1 H); 1,56 (dd, 1 H); 2,06 (d, 1H); 5,15 (d, OH); 5,90 (m, CH); 6,20-6,40 (m, CH₂); 8,85 (d, CH₃).

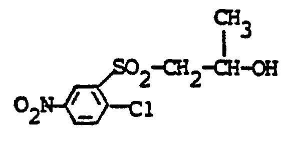

### Beispiel 22: [2-(2-Aminoethylamino)-5-nitro-phenyl]-(2-hydroxypropyl)-sulfon

28 g (0,1 mol) (2-Chlor-5-nitrophenyl)-(2-hydroxypropyl)-sulfon werden in 100 ml Isopropanol unter Rückfluß erwärmt. Dazu dosiert man langsam 15 ml Ethylendiamin und erwärmt eine weitere Stunde unter Rühren. Die abgekühlte Reaktionslösung wird mit 300 ml Wasser verdünnt und zwei Stunden bei 20_{°}C gerührt. Die abgeschiedenen gelblichen Kristalle werden abgesaugt, mit 100 ml Wasser gewaschen und getrocknet. Man erhält 28 g einheitliches [2-(2-Aminoethylamino)-5-nitrophenyl]-(2-hydroxypropyl)-sulfon.
¹H-NMR (d₆-DMSO/CF₃COOH): _{T} = 1,62 (d, 1 H); 1,80 (dd, 1 H); 2,10 (breites NH₃⁺); 2,70 (t, NH); 2,95 (d, 1 H); 5,90 (m, CH); 6,31 (t,CH₂); 6,40 - 6,65 (m, CH₂); 6,95 (m, CH₂); 8,81 (d, CHs).

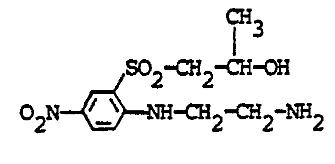

### Beispiel 23: [5-Amino-2-(2-aminoethylamino)-phenyl]-(2-hydroxypropyl)-sulfon

26,4 g [2-(2-Aminoethylamino)-5-nitro-phenyl]-(2-hydroxy-1-propyl)-sulfon werden in 200 ml Isopropanol suspendiert. Man setzt in einem Autoklaven 1 g Raney-Nickel zu der Suspension, drückt 60-70 bar Wasserstoff auf und erwärmt auf 60_{°}C.

Man rührt den Ansatz noch einige Zeit nach, bis kein Wasserstoff mehr aufgenommen wird. Nach Entspannen wird das Reaktionsgemisch mit 200 ml Wasser verdünnt, die erhaltene Lösung bei 60_{°}C von Nickel geklärt und der Rückstand mit 40 ml Wasser gewaschen. Die vereinigten Filtrate werden gemäß Beispiel 24 umgesetzt.

Ein aliquoter eingedampfter Teil der Lösung hinterläßt eine schwer kristallisierende zähe Masse des Amins.
¹NMR(DCl): _{T =} 2,17 (d, 1 H); 2,32-2,37, (dd, 1 H); 2,87 (d, 1 H); 5,63 (m, CH); 6,23 (t, CH₂); 6,38 (m, CH₂); 6,63 (m, CH₂); 8,68 (d, CH₃).

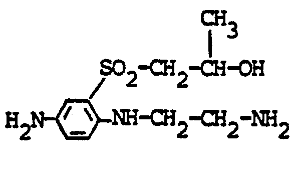

### Beispiel:

Eine nach Beispiel 23 erhaltene Lösung von 20,5 g [5-Amino-2-(2-aminoethylamino)-phenyl]-(2-hydroxy-1-propyl)-sulfon in 215 ml Wasser und 180 ml Isopropanoi wird mit konzentrierter Salzsäure auf pH 6,0 gestellt. Man setzt 9,2 g 2,3,5,6-Tetrachlorchinon zu, erwärmt auf 40°C und hält den pH-Wert mit 2n Sodalösung auf 5,5-5,8. Nach 2 Stunden steigert man die Temperatur auf 50_{°}C und hält den pH-Wert noch einige Zeit, bis der Sodaverbrauch zum Stillstand gekommen ist. Zu der erhaltenen braunen Lösung tropft man 550 ml 25%ige Natriumchloridlösung in 2 Stunden zu, saugt den ausgefallenen Niederschlag ab und wäscht den Filterkuchen mit verdünnter Natriumchloridlösung und mit Aceton. Man erhält ein braunes Produkt der Formel

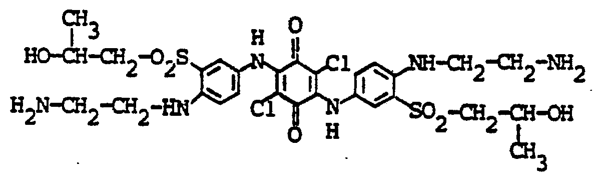

### Beispiel 25:

11,9 g des nach Beispiel 24 erhaltenen Kondensationsproduktes werden bei -5 bis 0_{°}C allmählich in 50 ml 20%iges Oleum eingetragen. Nach dem Eintragen läßt man die Temperatur der Lösung auf 15_{°}C ansteigen und trägt 7,7 g Kaliumperoxodisulfat im Laufe von 45 Minuten unter Kühlung so ein, daß die Temperatur bei 20_{°}C gehalten wird. Etwa 2 Stunden wird das Reaktionsgemisch bei 20_{°}C weitergerührt. Man trägt es nun vorsichtig in 270 g Eis ein, saugt bei 0-10•O das ausgefallene Produkt ab und wäscht den Filterkuchen mit 300 ml Wasser sulfatfrei. Das erhaltene Produkt entspricht der Formel 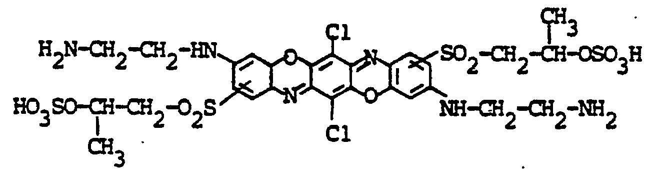 und ist nach Neutralisation mit klarer blauer Farbe in Wasser löslich. Das Produkt kann bei 50_{°}C im Umlufttrockenschrank getrocknet werden.

### Beispiel 26:

11,2 g Triphendioxazinkomponente des Beispiels 25 eines feuchten Filterkuchens werden in 200 ml Wasser durch Einstellen eines pH-Wertes von 8,0 gelöst. Man kühlt die blauviolette Lösung sofort auf 0_{°}C ab und läßt in 5 Minuten eine Lösung von 2-(2,4-Difluortriazinyl)-aminobenzol-1,4-disulfonsäure bzw. derem partiellem Natriumsalz zutropfen, die aus 9,1 g 2-Aminobenzol-1,4-disulfonsäure und 4,9 g Cyanurfluorid nach den Angaben des Beispiels 12 hergestellt wird.

Im Reaktionsgemisch hält man den pH-Wert mit 2n Natronlauge auf 8,0, die Temperatur auf 0-5_{°}C. Nach beendeter Umsetzung hat die Lösung eine rein blaue Farbe angenommen. Man läßt nun die Temperatur auf 20_{°}C ansteigen und salzt aus der Lösung den Farbstoff mit Kaliumchlorid aus. Die Fällung wird abgesaugt, der Filterkuchen mit 20%iger Kaliumchloridlösung gewaschen und nach Zusatz von etwas Phosphatpufferlösung bei 45_{°}C im Vakuum getrocknet. Man erhält einen Farbstoff der Formel 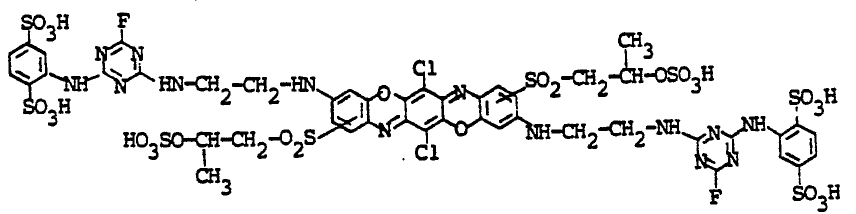 der Cellulosefasern aus langer Flotte in klaren blauen Tönen färbt. C.I. Indicator Number 13. pₘₐₓ = 616 nm in Wasser.

## Patentansprüche

1. Farbstoffe der Formel 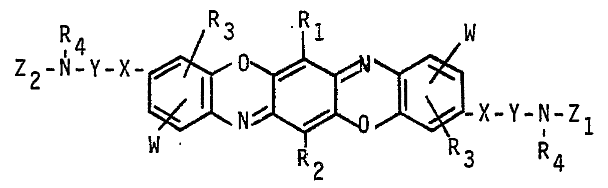 worin
R₁, R₂ = H, CI, Br, C₁-C₄-Alkyl, gegebenenfalls substituiertes Phenyl, ggf. substituiertes Phenoxy, C₁-C₄-Alkoxy, Acylamino, Carboxy, gegebenenfalls substituiertes Carbonamid,
R_{3 =} H, C₁-C₄-Alkyl, CI, Br, C₁-C₄-Alkoxy, Sulfo, Carboxy,
R₄ = H, gegebenenfalls durch SO₃H, OS0₃H, COOH, OPO₃H₂ oder OH substituiertes C₁-C₄-Alkyl, Cyclohexyl, Phenyl, Sulfophenyl,
X=N,O Rs
R₅ = H oder gegebenenfalls substituiertes C₁-C₆-Alkyl, Cycloalkyl, Aryl oder Aralkyl,

2. Farbstoffe des Anspruchs 1 mit W = nicht-faserreaktiver Alkyl-, Aralkyl-, Cycloalkyl- oder Arylsulfonylrest.

3. Farbstoffe der Ansprüche 1-2 mit W= S0₂Q worin
Q = C₂-Alkyl, gegebenenfalls substituiert durch SO₃H, COOH, Carbonamid, Sulfonamid oder C₁-C₄-Alkoxy; gegebenenfalls substituiertes C₁-Alkyl, C₃-C₆-Alkyl, Cycloalkyl, Aralkyl oder Aryl.
Y = gegebenenfalls substituiertes, gegebenenfalls durch 0, S oder N unterbrochenes C₂-Cs-Alkylen, Cyclohexylen, gegebenenfalls substituiertes Aralkylen oder Arylen, Z₁, Z₂ = H oder faserreaktiver Rest
W = nicht-faserreaktiver Sulfonylrest.

4. Farbstoffe der Formel 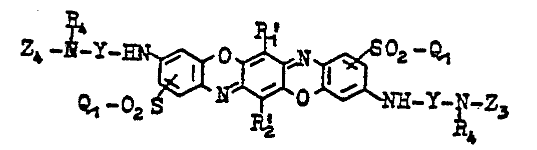 worin
Z₃, Z₄ = heterocyclischer faserreaktiver Rest oder H, R'₁, R'₂ = CI, Br, CH₃, H
Q₁ = Sulfo-C₁-C₆-alkyl, 3- bis 6-Sulfato-C₃-C₆-alkyl, Sulfo-phenyl-C₁-C₄-alkyl, Carboxy-C₁-C₆-alkyl, und
Y, R₄ die in Anspruch 1 angegebene Bedeutung haben.

5. Farbstoffe der Formel 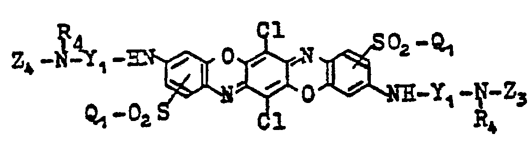 worin
Y₁ = C₂-C₆-Alkylen, Cyclohexylen und
Z₃, Z₄, R₄ und Q₁ die in Anspruch 1 bzw. 4 angegebene Bedeutung haben.

6. Farbstoffe der Formel
worin
R₄ = H, CH₂-CH₂-OSO₃H, CH₂.CH₂.OH
Zs, Z₆ = Halogentriazin - oder Halogenpyrimidinrest und Q₁ die in Anspruch 4 angegebene Bedeutung hat.

7. Verfahren zur Herstellung der Farbstoffe des Anspruchs 1, dadurch gekennzeichnet, daß man Verbindungen der Formel 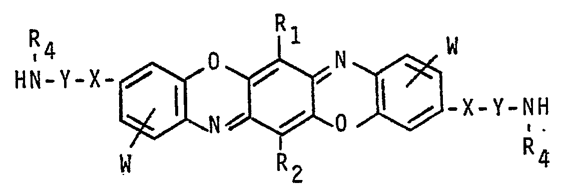 worin R₁, R₂, W, X, Y und R₄ die in Anspruch 1 angegebene Bedeutung haben mit Reaktivkomponenten Z-Halogen, worin Z = faserreaktiver Rest und Halogen = F, CI, Br ist, umsetzt.

8. Nitrosulfone der Formel 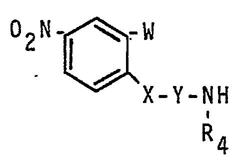 worin
W = nicht-faserreaktiver Sulfonylrest
X=-NR₅, O
R₅ = H, gegebenenfalls substituiertes C₁-C₆-Alkyl, Cycloalkyl, Aryl oder Aralkyl
R₄= H, gegebenenfalls durch SO₃H, OS0₃H, COOH, OP0₃H₂ oder OH substituiertes C₁-C₄-Alkyl, Cyclohexyl, Phenyl, Sulfophenyl,
Y = gegebenenfalls substituiertes, gegebenenfalls durch 0, S oder N unterbrochenes C₂-C₆-Alkylen, gegebenenfalls substituiertes Aralkylen oder Arylen.

9. Verfahren zur Herstellung der Nitrosulfone des Anspruchs 8, dadurch gekennzeichnet, daß man Nitroverbindungen der Formel 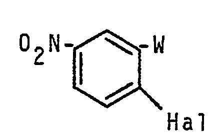 worin Hai = F, CI, Br bedeutet, mit Aminen der Formel 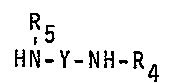 umsetzt;
oder mit Verbindungen der Formel HX-Y-G worin
G = N0₂, Acylamino ist
und anschließender Umwandlung der Gruppe G in die Gruppe -NHR₄,
worin R₄, R₅, X und Y die in Anspruch 8 angegebene Bedeutung haben.

10. Aminosulfone der Formel 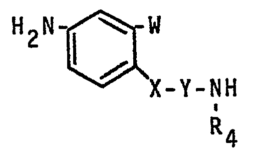 worin W, X, Y und R₄ die in Anspruch 8 angegebene Bedeutung haben.

11. Verfahren zur Herstellung der Aminosulfone des Anspruchs 10, dadurch gekennzeichnet, daß man die Nitrogruppe in den Nitrosulfonen des Anspruchs 8 zur Aminogruppe reduziert.

## Revendications

1. Colorants de formule 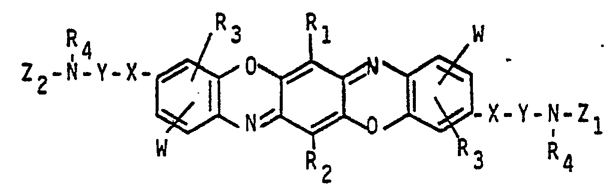 dans laquelle
R₁ et R₂ représentent chacun H, CI, Br, un groupe alkyle en C₁ à C₄, un groupe phényle éventuellement substitué, un groupe phénoxy éventuellement substitué, un groupe alcoxy en C₁ à C₄, un groupe alcyl- amino, carboxy, carboxamide éventuellement substitué,
R₃ représente H, un groupe alkyle en C₁ à C₄, CI, Br, un groupe alcoxy en Ci à C₄, un groupe sulfo ou carboxy,
R₄ représente H, un groupe alkyle en C₁ à C₄ (éventuellement substitué par SO₃H, OSOsH, COOH, OPO₃H₂ ou OH), un groupe cyclohexyle, phényle ou sulfophényle,
X représente 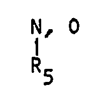
Rs représente H ou un groupe alkyle en C₁ à C₆, cycloalkyle, aryle ou aralkyle éventuellement substitués,
Y représente un groupe alkylène en C₂ à Ce éventuellement substitué, éventuellement interrompu voir 0, S ou N, un groupe cyclohexylène, un groupe aralkylène éventuellement substitué ou un groupe arylè- ne,
Z₁ et Z₂ représentent chacun H ou un reste pouvant réagir avec les fibres, et
W représente un reste sulfonyle non réactif à l'égard des fibres.

2. Colorants selon la revendication 1, dans lesquels W représente un reste alkyle, aralkyle, cycloalkyle ou arylsulfonyle, non réactifs à l'égard des fibres.

3. Colorants selon les revendications 1 et 2, dans lesquels W représente S0₂Q, où
Q représente un groupe alkyle en C₂, un groupe alcoxy (éventuellement substitué par S0₃H, COOH, un groupe carboxamide, sulfonamide
ou alcoxy en Ci à C₄), un groupe alkyle en C₁ éventuellement substitué, un groupe alkyle en C₃ à C₆, cycloalkyle, aralkyle ou aryle.

4. Colorants de formule 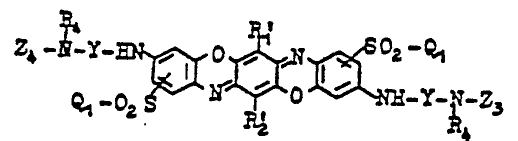 dans laquelle
Z₃ et Z₄ représentent chacun un reste hétérocyclique pouvant réagir avec les fibres, ou H,
R'₁ et R'₂ représentent chacun CI, Br, CH₃, H
Q₁ représente un groupe sulfo-alkyle en Ci à C₆, un groupe 3- à 6-sulfato-alkyle en C₃ à C₆, sulfo-phé- nyl-alkyle en C₁ à C₄, carboxy-alkyle en C₁ à C₆, et
Y et R₄ ont le sens indiqué à la revendication 1.

5. Colorants de formule 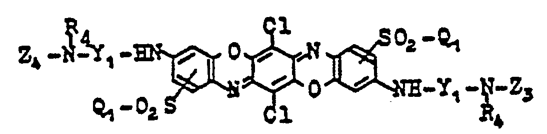 dans laquelle
Y₁ représente un groupe alkylène en C₂ à Cs, cyclohexylène, et
Z₃, Z₄, R₄ et Q₁ ont le sens indiqué à la revendication 1 ou 4.

6. Colorants de formule 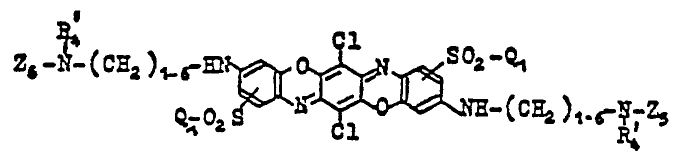 dans laquelle
R₄ représente H, CH₂-CH₂-OSO₃H, CH2-CH2-OH,
Z₅ et Zs représentent chacun un reste halogénotriazine ou halogénopyrimidine, et
Q₁ a le sens indiqué à la revendication 4.

7. Procédé de préparation de colorants de la revendication 1, caratérisé en ce qu'on fait réagir des composés de formule 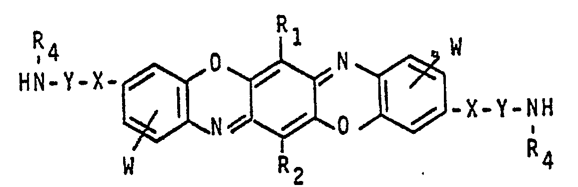 dans laquelle R₁, R₂, W, X, Y et R₄ ont le sens indiqué à la revendication 1, avec des composants réactifs Z-halogène, formule dans laquelle Z représente un reste pouvant réagir avec les fibres et halogène représente un atome de F, CI ou Br.

8. Nitrosulfones de formule 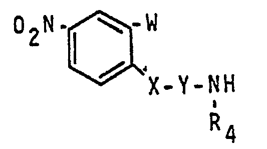 dans laquelle
W représente un reste sulfonyle non réactif à l'égard des fibres,
X représente -NR₅ ou 0,
R₅ représente H, un groupe alkyle en C₁ à C₆, cycloalkyle, aryle ou aralkyle éventuellement substitués,
R₄ représente H, un groupe alkyle en C₁ à C₄ (éventuellement subsitué par S0₃H, OS0₃H, COOH, OP0₃H₂ ou OH), un groupe cyclohexyle, phényle ou sulfophényle, et
Y représente un groupe alkylène en C₂ à C₆, éventuellement substitué, éventuellement interrompu par 0, S ou N, ou un groupe aralkylène ou aryle éventuellement substitués.

9. Procédé de préparation de nitrosulfones de la revendication 8, caractérisé en ce qu'on fait réagir des composés nitrés de formule 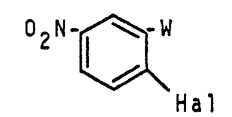 dans laquelle Hal représente F, CI ou Br, avec des amines de formule 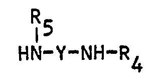 ou avec des composés de formule
HX-Y-G
dans laquelle
G représente N0₂ ou un groupe acylamino,
et l'on transforme ensuite le groupe G en le groupe -NHR₄,
les symboles R₄, R₅, X et Y ayant le sens indiqué à la revendication 8.

10. Aminosulfones de formule 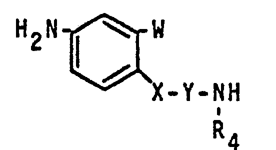 dans laquelle W, X, Y et R₄ ont le sens indiqué à la revendication 8.

11. Procédé de préparation des aminosulfones de la revendication 10, caractérisé en ce que, dans les nitrosulfones de la revendication 8, on réduit le groupe nitro en un groupe amino.

## Claims

1. Dyestuffs of the formula 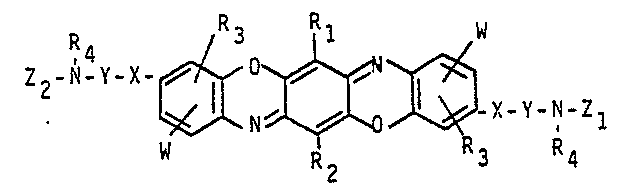 wherein
R₁, R₂ = H, Cl, Br, C₁-C₄-alkyl, optionally substituted phenyl, optionally substituted phenoxy, C₁-C₄- alkoxy, acylamino, carboxyl, optionally substituted carboxamide,
R₃ = H, C₁-C₄-alkyl, CI, Br, C₁-C₄-alkoxy, sulpho, carboxyl,
R₄ = H, C₁-C₄-alkyl optionally substituted by SOsH, OSO₃H, COOH, OPO₃H₂ or OH, cyclohexyl, phenyl, sulphophenyl, 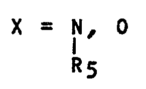
Rs = H or optionally substituted C₁-C₆-alkyl, cycloalkyl, aryl or aralkyl,
Y = optionally substituted C₂-C₆-alkylene which is optionally interrupted by O, S or N, cyclohexylene, optionally substituted aralkylene or arylene,
Z₁, Z₂ = H or fibre-reactive radical
W = non-fibre-reactive sulphonyl radical.

2. Dyestuffs of Claim 1 where
W = non-fibre-ractive alkyl-, aralkyl-, cycloalkyl- or aryl-sulphonyl radical.

3. Dyestuffs of Claims 1-2 where
W = S0₂Q wherein
Q = C₂-alkyl, optionally substituted by S0₃H, COOH, carboxamide, sulphonamide or C₁-C₄-alkoxy; optionally substituted C₁-alkyl, C₃-C₆-alkyl, cycloalkyl, aralkyl or aryl.

4. Dyestuffs of the formula 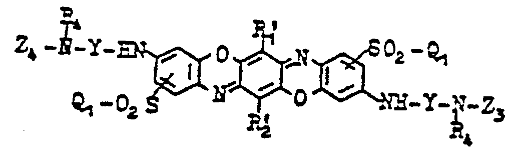 wherein
Z₃, Z₄ = hetercyclic fibre-reactive radical or H,
R'₁, R'₂ = Cl, Br, CH₃, H
Q₁ = sulpho-C₁-C₃-alkyl, 3- to 6-sulphato-C₃-C₆-alkyl, sulphophenyl-C₁-C₄-alkyl, carboxy-C₁-C₆-alkyl and
Y, R₄ have the meaning indicated in Claim 1.

5. Dyestuffs of the formula 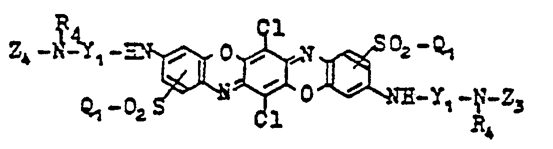 wherein
Yi = C₂-C₆-alkylene, cyclohexylene and
Z₃, Z4, R₄ and 0₁ have the meaning indicated in Claims 1 and 4.

6. Dyestuffs of the formula 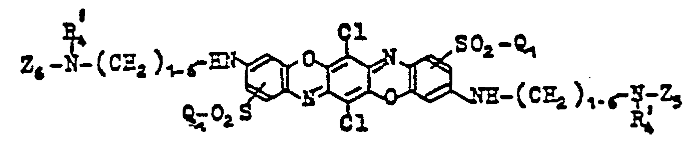 wherein
R₄ = H, CH2-CH2-OS03H, CH2-CH2-OH
Zₛ, Zs = halogenotriazine or halogenopyrimidine radical and
0₁ has the meaning indicated in Claim 4.

7. Process for the preparation of the dyestuffs of Claim 1, characterized in that compounds of the formula 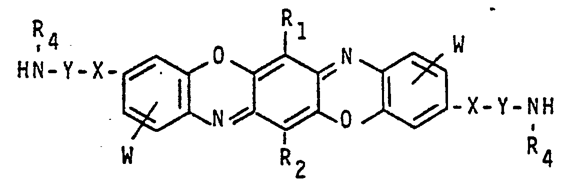 wherein
Ri, R₂, W, X, Y and R₄ have the meaning indicated in Claim 1
are reacted with reactive omponents Z-halogen
wherein
Z = fibre-reactive radical and
halogen = F, Cl, Br.

8. Nitrosulphones of the formula 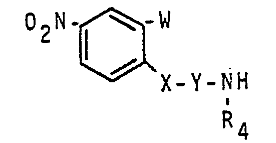 wherein
W = non-fibre-reactive sulphonyl radical
X = -NRs, 0
R₅ = H, optionally substituted C₁-C₆-alkyl, cycloalkyl, aryl or aralkyl
R₄ = H, C₁-C₄-alkyl optionally substituted by
S0₃H, OS0₃H, COOH, OP0₃H₂ or OH, cyclohexyl, phenyl, sulphophenyl,
Y = optionally substituted C₂-C₆-alkylene which is optionally interrupted by 0, S or N, optinally substituted aralkylene or arylene.

9. Process for the preparation of the nitrosulphones of Claim 8, characterized in that nitro compounds of the formula 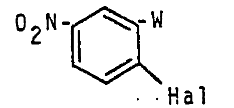 wherein
Hal = F, CI, Br,
are reacted with amines of the formula 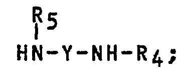 or with compounds of the formula
HX-Y-G
wherein
G = NO₂, acylamino
and subsequent conversion of the group G into the group
-NHR₄
wherein
R₄, Rₛ, X and Y have the meaning indicated in Claim 8.

10. Aminosulphones of the formula 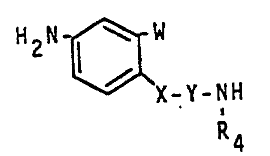 wherein
W, X, Y and R₄ have the meaning indicated in Claim 8.

11. Process for the preparation of the aminosulphones of Claim 10, characterized in that the nitro group in the nitrosulphones of Claim 8 is reduced to the amino group.
